# EUROPEAN PATENT SPECIFICATION

(11) **EP 4 414 898 B1**
(45) Date of publication and mention of the grant of the patent: **26.08.2026**
(21) Application number: 23155538.4
(22) Date of filing: 08.02.2023
(51) Int. Cl.: G06N 10/40

(54) **METHOD FOR IMPLEMENTING A QUANTUM MEASUREMENT**
VERFAHREN ZUR DURCHFÜHRUNG EINER QUANTENMESSUNG
PROCÉDÉ DE MISE EN OEUVRE D'UNE MESURE QUANTIQUE

(43) Date of publication of application: 14.08.2024
(73) Proprietor: Algorithmiq Oy, 00160 Helsinki (FI)
(72) Inventor: GLOS, Adam, 44-240 Zory (PL)
(74) Representative: Leinweber & Zimmermann

(56) References cited:
- US-A1- 2021 304 053
- HUANG HSIN-YUAN ET AL: "Quantum advantage in learning from experiments", SCIENCE, vol. 376, no. 6598, 10 June 2022 (2022-06-10), US, pages 1182 - 1186, XP055956887, ISSN: 0036-8075, DOI: 10.1126/science.abn7293
- ADAM GLOS ET AL: "Adaptive POVM implementations and measurement error mitigation strategies for near-term quantum devices", ARXIV.ORG, CORNELL UNIVERSITY LIBRARY, 201 OLIN LIBRARY CORNELL UNIVERSITY ITHACA, NY 14853, 16 August 2022 (2022-08-16), XP091295580

## Description

The present invention is related to a method for implementing a quantum measurement on a system quantum state of a composite system of a quantum computing device, said composite system comprising a plurality of quantum mechanical subsystems Qₙ, n=1, ..., N, N≥2, said quantum mechanical subsystems being preferably qubits, and said quantum computing device having a connectivity and operativity that allows to implement for each of said subsystems Qₙ a potentially imperfect realization of a joint unitary operation *Uₙₙ* and a joint quantum measurement on a joint system of said subsystem Qₙ and at least one connected subsystem *Q_{nc}* of said plurality of subsystems, said realization of said joint quantum measurement being described by a plurality of measurement operators ${M}_{{m}_{n , {n}_{c}}}^{\left(n, {n}_{c}\right)}$, each measurement operator ${M}_{{m}_{n , {n}_{c}}}^{\left(n, {n}_{c}\right)}$ being associated with a measurement outcome *m_{n,nc}*. The present invention is further related to an apparatus for carrying out said method.

Quantum computing devices potentially enable to perform computations that are intractable on a classical computing device. To this end, the quantum computing device comprises a composite system of a plurality of quantum mechanical subsystems, for example, qubits, which serve as carriers of information and which may be manipulated according to the laws of quantum mechanics. For example, the composite system may be prepared in a predetermined initial state and the quantum computing device may be operative to perform a unitary transformation on said initial state, for example, by quantum gate application, to thereby create a system quantum state which encodes the solution of a desired computational task. To read out the solution, a quantum measurement may be performed on the system quantum state.

Positive Operator Valued Measures (POVMs) describe the most general form of a quantum measurement. Of particular interest are informationally complete POVMs, as they can in principle be used to estimate any expectation value of our choice. Furthermore, the physical implementation of POVMs has a plurality of applications. For example, POVMs allow to distinguish probabilistically between non-orthogonal quantum states thereby enabling optimal state discrimination and efficient quantum tomography. In quantum communication and cryptography, POVMs are used to enable secure device-independent communication, or, on the contrary, to compromise quantum key distribution protocols. POVMs are also used in applications like Fusion Based Quantum Computation (see e.g. US 2021/0304053 A1).

Various protocols for implementing POVMs in physical systems are proposed in the literature, including sequential classically-controlled quantum operations (see, e. g., E. Andersson and D. K. L. Oi, Binary search trees for generalized measurement, Phys. Rev. A 77: 052 104, May 2018, R. Iten, R. Colbeck and M. Christandl, Quantum Circuits for Quantum Channels, Phys. Rev. A 95: 052 316, May 2017) and randomized quantum circuits (see, e. g., A. Acharya, S. Saha and A. M. Sengupta, Informationally complete POVM-based shadow tomography, arXiv:2105.05992, 2021). Other protocols rely on Naimark's dilation theorem. According to this theorem, any M-outcome POVM on a quantum system QS can be realized by introducing an ancilla system A with a Hilbert space of dimension M and spanned by M orthonormal basis states that are in one-to-one correspondence with the POVM measurement outcomes. Then, the M-outcome POVM may be realized by applying a global unitary operation to the joint system of the quantum system QS and the ancilla system A followed by a projective measurement on the basis states of the ancilla system A (see e.g. also H. Huang et.al, "Quantum advantage in learning from experiments", arXiv:2112.00778). Provided that the POVM measurement is realized using a quantum hardware with quantum particles that live in coherently controllable qudit spaces, Naimark's dilation theorem may also be applied within the qudit space (see L. E. Fischer, D. Miller, F. Tacchino, P. KI. Barkoutsos,D. J. Egger and I. Tavernelli, Ancilla-free implementation of generalized measurements for qubits embedded in a qudit space, arXiv:2203.07369v1).

While Naimark's dilation theorem allows in principle for the realization of an arbitrary POVM, its implementation in a physical system may be very inefficient. For example, in case that a POVM measurement should be implemented on each qubit of a register of N qubits, e. g., as the read-out of a quantum computation, each of the qubits has to be coupled to one ancilla system comprising at least one qubit. This approach multiplies the number of necessary qubits during the measurement stage. When the qubits are realized on a quantum chip, e. g., as superconducting qubits, the number of qubits that may then be used for a computation is thus reduced by a potentially large factor. Moreover, the limited connectivity of most quantum architectures may lead to a significant SWAP-gate overhead.

Due to these problems in the prior art, it is therefore an object of the present invention to provide an efficient method for implementing a Positive Operator Valued Measure on a quantum state of a composite system of a quantum computing device which comprises at least two quantum mechanical subsystems Qₙ, n = 1, ..., N, and to provide an apparatus for carrying out said method.

The present invention is defined in the independent claims. Further embodiments are set forth in the dependent claims.

According to a first aspect of the present invention, this object is attained by further developing the method for implementing a quantum measurement mentioned above in that the method comprises:
an initial measurement step which comprises for at least one initially selected subsystem *Q*_{*n*0} a realization of an n₀-th local Positive Operator Valued Measure on said initially selected subsystem *Q*_{*n*0} to thereby obtain a measurement outcome *m*_{*n*0};
an iterative measurement step which comprises for at least one iteratively selected subsystem Qₙ a realization of an n-th local Positive Operator Valued Measure on said iteratively selected subsystem Qₙ by implementing, by operation of said quantum computing device, said potentially imperfect realization of said joint unitary operation *U_{n,nc}* followed by said joint quantum measurement described by said plurality of measurement operators ${M}_{{m}_{n , {n}_{c}}}^{\left(n, {n}_{c}\right)}$ on said joint system of said iteratively selected subsystem Qₙ and said at least one connected subsystem *Q_{nc},* wherein said at least one connected subsystem *Q_{nc}* is in a previously determined quantum state described by a density operator *ρ_{nc},* to thereby obtain a measurement outcome *m_{n,nc},*
wherein for at least one iteratively selected subsystem Qₙ at least one of said connected subsystems *Q_{nc},* and preferably each of said connected subsystems *Q_{nc},* is one of said at least one initially selected subsystems *Q*_{*n*0}.

The quantum mechanical subsystems of said composite system are preferably qubits, i.e. quantum mechanical two-level systems. However, the invention is not limited to this, and the quantum mechanical subsystems may comprise qubits, qudits or any other quantum mechanical system in other embodiments. The plurality of N quantum mechanical subsystems comprises at least two quantum mechanical subsystems, i.e., N≥2.

The quantum computing device according to the above method has a special connectivity and operativity as has been explained above and may comprise means for implementing, for each subsystem Qₙ, the joint unitary operation on said joint system of said subsystem Qₙ and the least one connected subsystem *Q_{nc}* of said plurality. The number of connected subsystems may be different for each subsystem Qₙ or it may be the same for all subsystems Qₙ. In one embodiment, there may be exactly one connected subsystem *Q_{nc}* for at least one subsystem Qₙ. In the case, where the subsystem Qₙ and the one connected subsystem *Q_{nc}* are qubits, the joint unitary operation *U_{nnc}* is then a two-qubit unitary operation. In one embodiment, there is exactly one connected subsystem *Q_{nc}* for each subsystem Qₙ. The quantum computing device may be a superconducting quantum computing device based on superconducting qubits, but it is not limited to this.

In one example, the connected subsystem(s) of pairs of subsystems Qₙ, *Q_{ñ}*, are different from each other. In another example, there are at least two subsystems Qₙ, *Q_{ñ},* such that they have at least one connected subsystem in common.

For at least one subsystem Qₙ of said plurality, and preferably for all subsystems Qₙ, the joint unitary operation *U_{n,nc}* is a non-trivial unitary operation, that is, it is different from the identity operation.

In an ideal scenario, the physical realization of the joint unitary operation is perfect, i.e., the evolution of the joint system is a unitary evolution according to the joint unitary operation. However, in reality there may be errors in the implementation of *U_{n,nc}* due to noise or other imperfections so that the physical realization of the joint unitary operation is different from *U_{n,nc}.* For example, in reality a unitary operation which is different from the joint unitary operation *U_{n,nc}* may be implemented on the joint system. In other scenarios, the evolution may not even be a unitary evolution of the joint system, but a more general evolution described by a quantum channel *E*_{*n*,*nc*}. The quantum channel *E_{n,nc}* may, e.g., be determined experimentally via Quantum Process Tomography.

The quantum computing device may further comprise means for implementing, for each subsystem Qₙ, the joint quantum measurement on said joint system. For at least one subsystem Qₙ, and preferably for all subsystems Qₙ, the joint quantum measurement may be a non-trivial quantum measurement. That is, the measurement operators ${M}_{{m}_{n , {n}_{c}}}^{\left(n, {n}_{c}\right)}$ are non-trivial measurement operators, that is, they are different from the identity. The measurement operator ${M}_{{m}_{n , {n}_{c}}}^{\left(n, {n}_{c}\right)}$ has the associated measurement outcome *m_{nnc}.* The measurement operators fulfill ${\sum }_{{m}_{n , {n}_{c}}} {M}_{{m}_{n , {n}_{c}}}^{\left(n, {n}_{c}\right) †} {M}_{{m}_{n , {n}_{c}}}^{\left(n, {n}_{c}\right)} = 1$, wherein 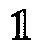 is the identity The joint quantum measurement may be any possible measurement. In general, at least one, and preferably, all joint quantum measurements are described by at least two measurement operators. The measurement operators may, e.g., be determined by Quantum Detector Tomography.

The initial measurement step comprises for at least one initially selected subsystem *Qₙₒ* the realization of the n₀-th local Positive Operator Valued Measure on said initially selected subsystem *Qₙₒ*. There is no limitation on how the POVM is realized in practice. For example, the n₀-th local POVM may be realized on the initially selected subsystem *Qₙₒ* by implementing, by operation of said quantum computing device, said potentially imperfect realization of said joint unitary operation *U_{nonoc}* followed by said joint quantum measurement described by said plurality of measurement operators ${M}_{{m}_{{n}_{o} , {n}_{oc}}}^{\left({n}_{o ,}{n}_{oc}\right)}$, on said initially selected subsystem *Qₙₒ* and said at least one connected subsystem *Q_{noc}* of said initially selected subsystem *Qₙₒ,* wherein said at least one connected subsystem *Q_{noc}* is in a predetermined quantum state described by a density operator *ρ_{noc},* said predetermined quantum state being prepared by quantum state preparation. In one example, said predetermined quantum state may be the ground state of the quantum mechanical subsystem Qₙ. The initially selected subsystems may be selected by a user, e.g., before the implementation of the method in one example.

In one embodiment, the initial measurement step comprises the realization of the n₀₋-th local Positive Operator Valued Measure for exactly one initially selected subsystem *Qₙₒ.* In another embodiment, the initial measurement step comprises for more than one initially selected subsystem *Qₙₒ* the realization of a n₀-th local Positive Operator Valued Measure. The local Positive Operator Valued Measures realized on each of said initially selected subsystems *Qₙₒ* may be different from another, or they may be identical to another. In one embodiment, where there is more than one initially selected subsystem *Qₙₒ,* the respective n₀-th local Positive Operator Valued Measures may be implemented simultaneously on each of said initially selected subsystems *Qₙₒ.* In this way, a speed-up of the method may be achieved. For example, there may be two initially selected subsystems Q₁ and Q₂, and a first local Positive Operator Valued Measure may be implemented on the first initially selected subsystem Q₁, and a second local Positive Operator Valued Measure may be implemented simultaneously or subsequently on the second initially selected subsystem Q₂.

The method further comprises an iterative measurement step, wherein for at least one iteratively selected subsystem Qₙ an n-th local Positive Operator Valued Measure is realized on said iteratively selected subsystem Qₙ. The iterative measurement step is implemented after the initial measurement step. In one embodiment, the iterative measurement step may comprise realizing the n-th local Positive Operator Valued Measure on exactly one selected subsystem Qₙ. In another embodiment, the iterative measurement step may comprise for a plurality of p iteratively selected subsystems *Q*_{*n*1}, *Q*_{*n*2}, ..., *Qₙₚ* a realization of an associated nₖ-th local Positive Operator Valued Measure k = 1, ...., p on the associated subsystem *Qₙₖ*. The n-th local Positive Operator Valued Measure is realized by implementing, by operation of the quantum computing device, the potentially imperfect realization of the joint unitary operation *U_{nnc}* followed by said joint quantum measurement described by said plurality of measurement operators on said joint system of said iteratively selected subsystem Q*ₙ* and said at least one connected subsystem *Q_{nc}.* The connected subsystem(s) is/are in a previously determined quantum state described by a density operator *ρ_{nc}* before the application of the joint unitary operation and the joint quantum measurement. I.e., the density operator *ρ_{nc}* describes the quantum state of the joint system of all connected subsystems *Q_{nc}* of the subsystem *Qₙ*. It will be explained in more detail below how the at least one connected subsystem *Q_{nc}* may be in the "previously determined quantum state". The iteratively selected subsystems may be selected by a user, e.g., before and/or during the implementation of the method in one example.

The implementation of the joint unitary operation followed by the joint quantum measurement on said joint system indeed realizes a local Positive Operator Valued Measure on the subsystem Qₙ, as may be understood from the following (see e.g., A. Glos et. al., arxiv: 2208.07817.v1, Appendix B).

When the potentially imperfect realization of said joint unitary operation *U_{n,nc}* followed by said joint quantum measurement described by the measurement operators ${M}_{{m}_{n , {n}_{c}}}^{\left(n, {n}_{c}\right)}$ is implemented on said joint system of the subsystem Qₙ and the at least one connected subsystem *Q_{nc},* the probability *p_{mnnc}* to obtain the measurement outcome *m_{n,nc},* is given by ${p}_{{m}_{n , {n}_{c}}} = tr \left[{M}_{{m}_{n , {n}_{c}}}^{\left(n, {n}_{c}\right)}{E}_{n , {n}_{c}}\left({ρ}_{n}⊗{ρ}_{{n}_{c}}\right){M}_{{m}_{n , {n}_{c}}}^{\left(n, {n}_{c}\right) †}\right]$ , wherein *E_{n,nc}* is the quantum channel describing the potentially imperfect realization of said joint unitary operation *U_{n,nc}, ρₙ* is a density matrix representation of the reduced state of the subsystem Qₙ and *ρ_{nc}* is the density operator of the previously determined quantum state of the at least one connected subsystem ${Q}_{{n}_{c}} ⋅ {M}_{{m}_{n , {n}_{c}}}^{\left(n, {n}_{c}\right) †}$ is the hermitian conjugate of the measurement operator ${M}_{{m}_{n , {n}_{c}}}^{\left(n, {n}_{c}\right)}$. When a POVM measurement with effects ${Π}_{{m}_{n , {c}_{n}}}^{n} \left({E}_{n , {n}_{c}}, {M}_{{m}_{n , {n}_{c}}}^{\left(n, {n}_{c}\right)}\right) = {\sum }_{{a}_{n}} {π}_{{a}_{n}}^{\left(n, {n}_{c}, {m}_{n , {n}_{c}}\right)} \left({E}_{n , {n}_{c}}, {M}_{{m}_{n , {n}_{c}}}^{\left(n, {n}_{c}\right)}\right) {B}_{{a}_{n}}^{\left(n\right)}$ having the associated measurement outcome *m_{n,nc}* is implemented on the subsystem Qₙ , wherein ${π}_{{a}_{n}}^{\left(n, {n}_{c}, {m}_{n , {n}_{c}}\right)} \left({E}_{n , {n}_{c}}, {M}_{{m}_{n , {n}_{c}}}^{\left(n, {n}_{c}\right)}, {ρ}_{{n}_{c}}\right) = tr \left[{M}_{{m}_{{}_{n , {n}_{c}}}}^{\left(n, {n}_{c}\right)}{E}_{n , {n}_{c}}\left({B}_{{a}_{n}}^{\left(n\right)}⊗{ρ}_{{n}_{c}}\right){M}_{{m}_{n , {n}_{c}}}^{\left(n, {n}_{c}\right) †}\right]$ are coefficients, ${B}_{{a}_{n}}^{\left(n\right)}$ are basis operators of a local orthonormal basis of an operator space associated with a Hilbert space Hₙ of said subsystem Qₙ, and aₙ is the index of summation, the probability to obtain the measurement outcome *m_{nnc}* is given by ${p}_{{m}_{n , {n}_{c}}}^{\left(POVM\right)} = tr \left[{Π}_{{m}_{n} , {n}_{c}}^{\left(n\right)}\left({E}_{n , {n}_{c}}, {M}_{{m}_{n , {n}_{c}}}^{\left(n, {n}_{c}\right)}, {ρ}_{{n}_{c}}\right){ρ}_{n}\right]$ which is obviously the same probability as ${p}_{{m}_{n , {n}_{c}}} = tr \left[{M}_{{m}_{n , {n}_{c}}}^{\left(n, {n}_{c}\right)}{E}_{n , {n}_{c}}\left({ρ}_{n}⊗{ρ}_{{n}_{c}}\right){M}_{{m}_{n , {n}_{c}}}^{\left(n, {n}_{c}\right) †}\right]$. Thus, the measurement outcome *m_{nnc}* may be understood as the measurement outcome of a local POVM measurement associated with the effect ${Π}_{{m}_{n , {n}_{c}}}^{\left(n\right)} \left({E}_{n , {n}_{c}}, {M}_{{m}_{n , {n}_{c}}}^{\left(n, {n}_{c}\right)}\right)$ defined above on the subsystem Qₙ. In one example, the measurement outcome *m_{n,nc}* may be provided to a classical computer for further data processing as described in more detail below.

According to the method of the first aspect of the present invention, for at least one iteratively selected subsystem Qₙ at least one of its connected subsystems *Q_{nc},* and preferably each of said connected subsystems *Q_{nc}*, is one of said at least one initially selected subsystems *Q*_{*n*0}. That is, for the subsystem Qₙ at least one, and preferably each, connected subsystem is such that a POVM has already been realized on said connected subsystem in the initial measurement step. For each subsystem Qₙ the system consisting of the at least one connected subsystem may be thus understood as "the ancilla system of the subsystem Qₙ".

As at least one, and preferably all connected subsystems of the iteratively selected subsystem Qₙ are such that a local Positive Operator Valued Measure has been realized on at least one, and preferably each connected subsystem in the initial measurement step, fewer or even no additional ancilla systems are needed to implement the local POVM on the iteratively selected subsystem Qₙ contrary to what is known in the art of dilation. The reason is that in principle one can implement a POVM without ancillas, but this comes at a price, namely more rounds of measurements (shots) are required, or not every POVM can be implemented. In this way, the method according to the present invention is very resource-efficient.

In one embodiment, the imperfect realization of the joint unitary operation and the joint quantum measurement for at least one subsystem Qₙ is such that the local Positive Operator Valued Measure realized on the subsystem Qₙ is informationally complete. In a further example, the informationally complete Positive Operator Valued Measure may be a minimal informationally complete Positive Operator Valued Measure. If the local POVM is informationally complete, each observable O⁽ⁿ⁾ defined on the subsystem Qₙ may be expressed in terms of the local effects ${Π}_{{m}_{n , {n}_{c}}}^{\left(n\right)}$ of the local POVM according to ${O}^{\left(n\right)} = {\sum }_{{m}_{n , {n}_{c}}} {ω}_{{m}_{n , {n}_{c}}} {Π}_{{m}_{n , {n}_{c}}}^{\left(n\right)}$, wherein *ω_{mn,nc}* are coefficients. If the method according to the present invention is repeated S times, a series of measurement outcomes ${m}_{n , {n}_{c}}^{\left(1\right)} , … , {m}_{n , {n}_{c}}^{\left(s\right)}$ is obtained for the subsystem Qₙ. Then, an estimation for the value of the observable O⁽ⁿ⁾ may be obtained via the formula ${\overline{O}}^{\left(n\right)} = \frac{1}{S} {\sum }_{s = 1}^{S} {ω}_{{m}_{n , {n}_{c}}^{\left(s\right)}}$ . In one example, the value of the observable O⁽ⁿ⁾ may be the energy of the subsystem Qₙ, and the system quantum state may be a state of interest, e.g., a ground state of the system.

One example of the method according to the first aspect of the present invention is as follows: In the initial measurement step, a first local POVM is realized on the subsystem Q₁, a second local POVM is realized on the subsystem Q₂, and a third local POVM is realized on the subsystem Q₃. In the iterative measurement step, a fourth local POVM is realized on the subsystem Q₄, and a fifth local POVM is realized on the subsystem Q₅. The subsystem Q₄ has the connected subsystems Q₁ and Q₂. The fourth local POVM is realized on Q₄ by implementing a local unitary operation on the joint system of the subsystems Q₄, Q₁, Q₂ followed by a joint measurement on said joint system. The subsystem Q₅ has the connected subsystem Q₃, and the fifth local POVM is realized on Q₅ by implementing a local unitary operation on the joint system of the subsystems Q₅ and Q₃ followed by a joint quantum measurement on said joint system. In one example, the subsystems Q₁, ..., Q₅ may be qubits.

According to an embodiment of the method of the present invention said iterative measurement step may be iterated, and the connectivity of the quantum computing device and the iteration may be such that for at least one of the iteratively selected subsystems Qₙ of said iteration, and preferably for each iteratively selected subsystem Qₙ, the n_{c}-th local Positive Operator Valued Measure has been previously realized on at least one, and preferably on each of said connected subsystems *Q_{nc}* of said at least one iteratively selected subsystem Qₙ in a previous initial or iterative measurement step. According to the above embodiment, the iterative measurement step is repeated I≥2 times, i.e., the iterative measurement step is implemented I times. The first iterative measurement step is implemented after the initial measurement step, and for at least one, and preferably for each, iteratively selected subsystem Qₙ at least one, and preferably each, of said connected subsystems *Q_{nc},* is one of said at least one initially selected subsystems *Q*_{*n*o}*,* as has been explained above. Then, for each iterative measurement step after the first iterative measurement step at least one, and preferably each, of the iteratively selected subsystems Qₙ of said iterative measurement step is such that the n_{c}-th local Positive Operator Valued Measure has been previously realized on at least one, and preferably on each, of said connected subsystems *Q_{nc}* of said at least one iteratively selected subsystem Qₙ in a previous initial or iterative measurement step.

In one example of the above embodiment, the first iterative measurement step following the initial measurement step is such that for each iteratively selected subsystem Qₙ each of said connected subsystems *Q_{nc}* is one of said at least one initially selected subsystems *Qₙₒ,* and for each iterative measurement step subsequent to the first iterative measurement step the iteratively selected subsystem(s) Qₙ is/are such that the n_{c}-th local Positive Operator Valued Measure has been previously realized on each of said connected subsystems *Q_{nc}* of said iteratively selected subsystem(s) Qₙ in a previous iterative measurement step.

In one example, there may be N≥4 quantum mechanical subsystems with a line-connectivity, i.e., for n=2, ..., N, the subsystem Qₙ₋₁ is the connected subsystem of the subsystem Qₙ. Then, the initial measurement step may comprise implementing the 2^{nd} (2-th) local POVM on the subsystem Q₂ by implementing, by operation of the quantum computing device, the potentially imperfect realization of the joint unitary operation *U*_{2,1} followed by the joint quantum measurement described by the joint measurement operators ${M}_{{m}_{2 , 1}}^{\left(2, 1\right)}$ on the joint system of the subsystem Q₂ and its connected subsystem Q₁, thereby obtaining the measurement outcome *m*_{2,1}. The connected subsystem Q₁ may be prepared in a predetermined quantum state described by the density operator *ρ*₁ before the application of the joint unitary operation. Then, the iterative measurement step is iterated I=N-2 times, and in the i-th iteration, i=1, ..., N-2, the subsystem Qᵢ₊₂ is the iteratively selected subsystem, and the (i+2)-th local POVM is realized on the subsystem Qᵢ₊₂ by implementing, by operation of the quantum computing device, the potentially imperfect realization of the joint unitary operation *U*_{*i*+2,*i*+1} followed by the joint quantum measurement described by the measurement operators ${M}_{{m}_{i + 2 , i + 1}}^{\left(i+2,i+1\right)}$ on the joint sys-tem of the iteratively selected subsystem Qᵢ₊₂ and its connected subsystem Qᵢ₊₁ to thereby obtain a measurement outcome *m*_{*i*+2,*i*+1}.

According to the above embodiment, initial and/or iteratively selected subsystems of a previous initial or iterative measurement step serve as ancilla systems for implementing the respective n-th local Positive Operator Valued Measure on the subsystem Qₙ. In this way, the above embodiment is very resource efficient, as no further ancilla systems in addition to the plurality of quantum mechanical subsystems of the composite system is required for the iterative measurement steps.

In one embodiment of the method according to the present invention said iteration is terminated when for each subsystem Qₙ the respective n-th local Positive Operator Valued Measure has been realized. For this embodiment it is preferred that for each iteratively selected subsystem Qₙ of one of the iterative measurement steps the n_{c}-th local Positive Operator Valued Measure has been previously realized on each of said connected subsystems *Q_{nc}* of said iteratively selected subsystem Qₙ in a previous initial or iterative measurement step. Then, if the system quantum state of the composite quantum system is described by a density operator ρ before the initial measurement step, the method implements a POVM measurement of said system quantum state described by global effects which are tensor products of local POVM effects associated with the respective initially and iteratively selected subsystems *Q*_{*n*o}*,* Qₙ, ${Π}_{m} = {⊗}_{{n}_{0} ∈ {S}_{IN}} {Π}_{{m}_{{n}_{0}}}^{\left({n}_{0}\right)} {⊗}_{n ∈ {S}_{IT}} {Π}_{{m}_{n , {n}_{c}}}^{\left(n\right)} \left({E}_{n , {n}_{c}}, {M}_{{m}_{n , {n}_{c}}}^{\left(n, {n}_{c}\right)}, {ρ}_{{n}_{c}}\right)$ with associated measurement outcome $m = \left({\left({m}_{{n}_{0}}\right)}_{{n}_{0} ∈ {S}_{IN}}, {\left({m}_{n , {n}_{c}}\right)}_{n ∈ {S}_{IT}}\right)$.

Here, ${Π}_{{m}_{{n}_{0}}}^{\left({n}_{0}\right)}$ is the effect of the n₀-th local POVM realized on the initial subsystem *Q*_{*n*0} with measurement outcome *m*_{*n*0}, *S_{IN}* is the set of indices of the initially selected subsystems, ${Π}_{{m}_{n , {n}_{c}}}^{\left(n\right)}$ is the effect of the n-th local POVM realized on the iteratively selected subsystem Qₙ with measurement outcome *m_{n,nc}* and *S_{IT}* is the set of indices of the iteratively selected subsystems.

If each of the local POVMs is informationally complete, the global effects Π*ₘ* describe an informationally complete POVM as well. Then, each observable O which is defined on the composite system may be expressed in terms of these global effects according to 0 = Σ*ₘ ωₘ*Π*ₘ* with coefficients *ωₘ*. If the method according to the present embodiment is repeated S times, a sequence of measurement outcomes *m*₁, ..., *m_{S}* is obtained. Then, an estimator for the value of the observable O may be obtained via the formula $\overline{O} = \frac{1}{S} {\sum }_{s = 1}^{S} {ω}_{{m}_{s}}$. For example, an estimate of the total energy of the system may be obtained in this way.

In another embodiment of the method according to the present invention, said connectivity and said operativity of said quantum computing device may be such that for at least one subsystem Qₙ, and preferably for each subsystem, the potentially imperfect realization of said joint unitary operation *U_{n,nc}* on said joint system is by an application of a sequence of local unitary operations, wherein each local unitary operation is acting on at most two subsystems of said joint system. In this case, the means for applying the joint unitary operation may be operative to apply the sequence of local unitary operations on the joint subsystem. In an example where all subsystems are qubits, each local unitary operation may be either a single-qubit gate or a two-qubit gate. These gates may be realized with high accuracy in state-of-the art quantum computing devices, including, but not limited to superconducting quantum computing devices.

In the initial measurement step of the method according to the present invention, the n₀-th local POVM is realized on the at least one initially selected subsystem *Q*_{*n*0}. The way how the n₀-th local POVM is realized is not limited. However, in certain examples it is preferable that the n₀-th local POVM is realized in the same way as the n-th local POVM on the iteratively selected subsystems, namely by applying a joint unitary operation on a joint system of said initially selected subsystem *Q*_{*n*o} and the at least one connected subsystem of said initially selected subsystem *Q*_{*n*o} followed by a joint measurement on said joint system. Thus, according to another embodiment of the method of the present invention, said plurality of subsystems may be partitioned in a system subset and an ancillary subset which is a complement of said system subset such that said ancillary subset comprises the at least one connected subsystem *Q_{nsc}* of at least one starting subsystem *Qₙₛ* in said system subset, wherein for each starting subsystem *Qₙ* the previously determined quantum state of said at least one connected subsystem *Q_{nsc}* may be a predetermined quantum state described by the density operator *ρ_{nsc}* and wherein said connectivity and said operativity of said quantum computing device may further allow to prepare said system quantum state by preparing the plurality of subsystems in said system subset in a desired solution state, preferably by quantum gate application, and by preparing for each starting subsystem *Qₙₛ* the at least one connected subsystem *Q_{nsc}* of said ancillary subset in the predetermined quantum state described by the density operator *ρ_{nsc},* wherein said method may further comprise:
preparing said system quantum state by operation of said quantum computing device;
and wherein the at least one initially selected subsystem *Q*_{*n*o} comprises said at least one starting subsystem *Qₙ*, and wherein for each of said starting subsystems *Qₙₛ* the realization of the nₛ-th local Positive Operator Valued Measure in the initial measurement step is by implementing, by operation of said quantum computing device, said potentially imperfect realization of said joint unitary operation *U_{nsnsc}* followed by said joint quantum measurement described by said plurality of measurement operators ${M}_{{m}_{{n}_{s} , {n}_{sc}}}^{\left({n}_{s}, {n}_{sc}\right)}$ on said joint system of said starting subsystem *Qₙₛ* and said at least one connected subsystem *Q_{nsc}* which is in the previously determined quantum state described by the density operator *ρ_{nsc},* to thereby obtain a measurement outcome *m_{nsnc}.*

According to the above embodiment, the plurality of subsystems Qₙ is partitioned into two subsets, namely the system subset and the ancillary subset. The composite system of the plurality of subsystems Qₙ in the system subset may be prepared in a desired solution state by the quantum computing device. The solution state may be a state of interest, e.g., a quantum state encoding the solution of a quantum computation. The subsystems in the ancillary subset may be considered as ancilla systems which are used to implement the n₀-th local Positive Operator Valued Measure on at least one initially selected subsystem *Q*_{*n*o}. Therefore, the ancillary subset is such that it comprises for at least one starting subsystem *Qₙₛ* in the system subset at least one, and preferably all connected subsystems *Q_{nsc},* of said starting subsystem *Qₙₛ*. When there is a plurality of initially selected subsystems in the initial measurement step, the ancillary subset comprises preferably all connected subsystems of the plurality of initially selected subsystems. In one example at least one subsystem in the ancillary subset is also the connected subsystem or one of the connected subsystems of an iteratively selected subsystem. I.e., said subsystem in the ancillary subset is used at least twice for the implementation of a local POVM, once in the initial measurement step and then in an iterative measurement step.

In one example of the above embodiment it may be preferable that said iteration is terminated when for each subsystem Qₙ in said system subset the local Positive Operator Valued Measure has been realized. Then, the method implements a POVM measurement of said solution state described by global effects which are tensor products of local POVM effects associated with the respective initially and iteratively selected subsystems as has been explained above.

In one example, the order in which the subsystems are iteratively selected in the iterative measurement step may be predetermined. However, the invention is not limited to this. In another embodiment of the method according to the present invention at least one iterative measurement step, and preferably each iterative measurement step, comprises selecting the iteratively selected subsystems Qₙ on the basis of the measurement outcome of a preceding initial or iterative measurement step. I.e., the order in which the subsystems are iteratively selected is decided during the measurement itself. In this way, the class of (global) POVMs that can be implemented is larger, because by changing the order of qubits measured we change the correlation structure. This has the potential of providing POVM candidate which with the same number of classical outcomes allows to estimate the energy with higher precision.

Before the joint unitary operation is applied to the joint system of the subsystem *Qₙ* and the at least one connected subsystem *Q_{nc},* the quantum state of the at least one connected subsystem *Qₙ* is a previously determined quantum state described by a density operator *ρ_{nc}*. In one embodiment of the method according to the present invention, the method is such that for at least one, and preferably for each, iteratively selected subsystem *Qₙ* the previously determined quantum state of said connected subsystem *Q_{nc}* may be a predetermined quantum state described by the predetermined density operator *ρ_{nc},* and said method may further comprise preparing the at least one connected subsystem *Q_{nc}* in said predetermined quantum state before the realization of the n-th local Positive Operator Valued Measure on said at least one iteratively selected subsystem *Qₙ* in the iterative measurement step. The predetermined quantum state may be determined in advance before the iterative measurement step is implemented. In one example, the quantum computing device may comprise state preparation means for preparing the at least one connected subsystem *Q_{nc}* of the iteratively selected subsystem *Qₙ* in the predetermined quantum state, and said method may further comprise preparing said at least one connected subsystem *Q_{nc}* in the predetermined quantum state by operation of said state preparation means.

In one example of the above embodiment, said predetermined quantum state may be a pure quantum state. In one example where the subsystems are qubits with the two levels described by the pure state vectors |0〉 and |1〉, the predetermined quantum state may be one of the two levels, i.e., it may be the quantum state described by the state vectors |0〉 or |1〉.

When the previously determined quantum state is the predetermined quantum state, the quantum channel *E_{n,c}* describing the potentially imperfect realization of the joint unitary operation *U_{n,nc}* and the measurement operators ${M}_{{m}_{n , {n}_{c}}}^{\left(n, {n}_{c}\right)}$ describing the joint quantum measure-ment on the joint quantum system of the subsystem *Qₙ* and the at least one connected subsystem *Q_{nc},* are known, e.g., they are determined by Quantum Process Tomography and/or Quantum Detector Tomography, one knows that a local POVM is implemented on the subsystem *Qₙ,* the local POVM being described by effects ${Π}_{{m}_{n , {n}_{c}}}^{\left(n\right)} \left({E}_{n , {n}_{c}}, {M}_{{m}_{n , {n}_{c}}}^{\left(n, {n}_{c}\right)}\right) = {\sum }_{{a}_{n}} {π}_{{a}_{n}}^{\left(n, {n}_{c}, {m}_{n , {n}_{c}}\right)} \left({E}_{n , {n}_{c}}, {M}_{{m}_{n , {n}_{c}}}^{\left(n, {n}_{c}\right)}\right) {B}_{{a}_{n}}^{\left(n\right)}$ , wherein ${π}_{{a}_{n}}^{\left(n, {n}_{c}, {m}_{n , {n}_{c}}\right)} \left({E}_{n , {n}_{c}}, {M}_{{m}_{n , {n}_{c}}}^{\left(n, {n}_{c}\right)}, {ρ}_{{n}_{c}}\right) = tr \left[{M}_{{m}_{n , {n}_{c}}}^{\left(n, {n}_{c}\right)}{E}_{n , {n}_{c}}\left({B}_{{a}_{n}}^{\left(n\right)}⊗{ρ}_{{n}_{c}}\right){M}_{{m}_{n , {n}_{c}}}^{\left(n, {n}_{c}\right) †}\right]$ are coefficients and ${B}_{{a}_{n}}^{\left(n\right)}$ are basis operators of a local orthonormal basis of an operator space associated with a Hilbert space Hₙ of said subsystem *Qₙ.* If in one embodiment it is the goal to implement a certain n-th local POVM on the subsystem *Qₙ*, the quantum computing device may be constructed such that it is operative to implement the joint local unitary operation and the joint quantum measurement that result in a certain local POVM for a certain predetermined quantum state of the at least one connected subsystem *Qₙ* of the subsystem *Qₙ.*

According to a further embodiment of the method of the present invention, said quantum computing device may be further operative to implement for at least one of said subsystems Qₙ, and preferably for each subsystem *Qₙ*, a plurality of Pₙ potentially imperfect realizations of joint unitary operations ${U}_{n , {n}_{c}}^{\left(p\right)}$, *p* = 1, ....,*Pₙ*, and a plurality of Rₙ joint quantum measurements on the joint system of said subsystem Qₙ and the at least one connected subsystem *Q_{nc},* said realization of said r-th joint quantum measurement, r=1, ..., Rₙ, being described by a plurality of measurement operators ${M}_{{m}_{n , {n}_{c}}}^{\left(r, n, {n}_{c}\right)}$, each measurement operator ${M}_{{m}_{n , {n}_{c}}}^{\left(r, n, {n}_{c}\right)}$ being associated with a measurement outcome ${m}_{n , {n}_{c}}^{\left(r\right)}$, and wherein said realization of said n-th local Positive Operator Valued Measure on said subsystem Qₙ comprises selecting one of said joint unitary operations ${U}_{n , {n}_{c}}^{\left(p\right)}$ of said plurality and selecting one of said joint quantum measurements of said plurality described by the measurement operators ${M}_{{m}_{n , {n}_{c}}}^{\left(r, n, {n}_{c}\right)}$ and implementing, by operation of said quantum computing device, said potentially imperfect realization of said selected joint unitary operation ${U}_{n , {n}_{c}}^{\left(p\right)}$ followed by said selected joint quantum measurement described by said plurality of measurement operators ${M}_{{m}_{n , {n}_{c}}}^{\left(r, n, {n}_{c}\right)}$ on said joint system of said iteratively selected subsystem Qₙ and said at least one connected subsystem *Q_{nc}.* According to this embodiment, the quantum computing device is operative to implement not only a single but a plurality of potentially imperfect realizations of different joint unitary operations and different joint quantum measurements on the joint system. In one example, the quantum computing device may be operative to implement a potentially imperfect realization of a continuous or discrete parametric family of joint unitary operations *U_{n,nc}*(*λₙ*) with a continuous or discrete one- or multidimensional parameter λₙ for at least one, and preferably for each subsystem *Qₙ*. Additionally or alternatively, the quantum computing device may be operative to implement a continuous or discrete parametric family of joint quantum measurements described by measurement operators ${M}_{{m}_{n , {n}_{c}}}^{\left(n, {n}_{c}\right)} \left({μ}_{n}\right)$ with discrete or continuous one- or multidimensional parameter µₙ for at least one, and preferably for each subsystem *Qₙ*.

In one example of the above embodiment, the selection may be on the basis of the measurement outcome of a preceding initial or iterative measurement step and/or said selection may be a random selection.

As has been explained above, the previously determined quantum state of the at least one connected subsystem may be a predetermined quantum state in one embodiment. However, the invention is not limited to this. In another embodiment of the method of the present invention, the method may further be such that for at least one iteratively selected subsystem *Qₙ*, and preferably for each iteratively selected subsystem *Qₙ*, the *n_{c}*-th local Positive Operator Valued Measure has been realized on the at least one connected subsystem *Q_{nc}* with measurement outcome *m_{nc}* in the initial measurement step or in one of the previous iterative measurement steps, the previously determined quantum state of the at least one connected subsystem *Q_{nc}* may be the state of said at least one connected subsystem *Q_{nc}* after the realization of the n_{c}-th local Positive Operator Valued Measure on said connected subsystem *Q_{nc}*, and said method may further comprise inferring the reduced density operator *ρ_{nc}* of said at least one connected subsystem *Q_{nc}* on the basis of said measurement outcome *m_{nc}.* I.e., according to the above embodiment, the previously determined quantum state of the at least one connected subsystem may be determined by the measurement outcome of the realization of the n_{c}-th local Positive Operator Valued Measure on said at least one connected subsystem *Q_{nc}.* When there is more than one connected subsystem *Q_{nc},* the measurement outcome *m_{nc}* consists of the measurement outcomes for the realization of the local POVM on each of the connected subsystems. In this way, no additional state preparation of the at least one connected subsystem is required, thereby increasing the efficiency of the method.

The result of this method is illustrated in the following using the example of the N≥4 quantum mechanical subsystems with the line-connectivity introduced above. Recall that in the initial measurement step the measurement outcome *m*_{2,1} is obtained, and in the i-th iteration the measurement outcome *m*_{*i*+2,*i*+1} is obtained for the implementation of the (i+2)-th local POVM on the subsystem Qᵢ₊₂. It may be possible to infer the reduced density operator *ρ*_{*i*+2} of the subsystem Qᵢ₊₂ after the realization of the nᵢ₊₂-th local POVM from the measurement outcome *m*_{*i*+2,*i*+1}. For example, when the joint quantum measurement on the subsystem Qᵢ₊₂ is a local quantum measurement (see, e.g., G. Aubrun and C. Lancien in QIC, Vol. 15, No. 5-6, 512--540 (2015)) with measurement operators ${M}_{{m}_{i + 2 , i + 1}}^{\left(i+2,i+1\right)} = {M}_{{m}_{i + 2}}^{\left(i+2\right)} ⊗ {M}_{{m}_{i + 1}}^{\left(i+1\right)}$, wherein ${M}_{{m}_{i + 2}}^{\left(i+2\right)} = \left|{m}_{i + 2}\right〉 \left〈{m}_{i + 2}\right|$ is a projective measurement operator on the eigenstate |*m*_{*i*+2}〉 of the subsystem Qᵢ₊₂ with measurement outcome mᵢ₊₂, and ${M}_{{m}_{i + 1}}^{\left(i+1\right)} = \left|{m}_{i + 1}\right〉 \left〈{m}_{i + 1}\right|$ is a projective measurement operator on the eigenstate |*m*_{*i*+1}〉 of the subsystem Qᵢ₊₁ with measurement outcome mᵢ₊₁, the state of the subsystem Qᵢ₊₂ after the application of the joint quantum measurement is described by the state vector |*m*_{*i*+2}〉. This is the state of the connected subsystem Qᵢ₊₂ of the iteratively selected subsystem Qᵢ₊₃ in the next iterative measurement step. Thus, when the iterative measurement step is iterated until the nᵢ-th local POVM is realized on all subsystems Qᵢ, i=2, ..., N, a sequence of measurement outcomes *m*_{2,1}, *m*_{3,2} ..., *m_{N},*_{*N*-1} is obtained. When the subsystem Q₁, which is the connected subsystem of the initially selected subsystem Q₂ is prepared in the predetermined quantum state described by the density operator *ρ*₁ before the implementation of the initial measurement step, the POVM with the following effects is implemented on the subsystems Q₂, ...,O_{N}: ${Π}_{{m}_{2 , 1}}^{\left({p}_{1}\right)} ⊗ {Π}_{{m}_{3 , 2}}^{\left({m}_{2 , 1}\right)} ⊗ {Π}_{{m}_{4 , 3}}^{\left({m}_{3 , 2}\right)} ⊗ … ⊗ {Π}_{{m}_{N , N - 1}}^{\left({m}_{N - 1 , N - 2}\right)}$ , wherein ${Π}_{{m}_{2 , 1}}^{\left({ρ}_{1}\right)} = {\sum }_{{a}_{2}} {π}_{{a}_{2}}^{\left({ρ}_{1}, {m}_{2 , 1}\right)} {B}_{{a}_{2}}^{\left(2\right)}$ is the 2-th local POVM implemented in the initial measurement step, with coefficient ${π}_{{a}_{2}}^{\left({ρ}_{1}, {m}_{2 , 1}\right)} = tr \left[{E}_{2 , 1}\left({B}_{{a}_{2}}^{\left(2\right)}⊗{ρ}_{1}\right){M}_{{m}_{2 , 1}}^{\left(2, 1\right)}\right]$, wherein ${B}_{{a}_{2}}^{\left(2\right)}$ are basis operators of a local orthonormal basis of an operator space associated with a Hilbert space H₂ of the initially selected subsystem Q₂, and ${Π}_{{m}_{i + 2 , i + 1}}^{\left({m}_{i + 1 , i}\right)} = {\sum }_{{{a}_{i}}_{+ 2}} {π}_{{a}_{i + 2}}^{\left({m}_{i + 2 , i + 1}, {m}_{i + 1 , i}\right)} {B}_{{a}_{i + 2}}^{\left(i+2\right)}$ is the (i+2)-th local POVM implemented on the iteratively selected subsystem Qᵢ₊₂ in the i+th iterative measurement step, i=2, ..., N, with coefficients ${π}_{{a}_{i + 2}}^{\left({m}_{i + 2 , i + 1}, {m}_{i + 1 , i}\right)} = tr \left[{E}_{i + 2 , i + 1}\left({B}_{{a}_{i + 2}}^{\left(i+2\right)}⊗{ρ}_{i + 1}\right){M}_{{m}_{i + 2 , i + 1}}^{\left(i+2,i+1\right)}\right]$ , wherein ${B}_{{a}_{i + 2}}^{\left(i+2\right)}$ are basis operators of a local orthonormal basis of an operator space associated with a Hilbert space Hᵢ₊₂ of the iteratively selected subsystem Qᵢ₊₂.

In another embodiment of the method of the present invention, the method may be such that for at least one iteratively selected second subsystem *Q*_{*n*2} of a second iterative measurement step the at least one connected subsystem *Q*_{*n*1,2*c*} is also the at least one connected subsystem *Q*_{*n*1,2*c*} of a previously selected first subsystem *Q*_{*n*1} of a previous iterative measurement step, the previously determined quantum state of said at least one connected subsystem *Q*_{*n*1,2*c*} in said second iterative measurement step being the state of said at least one connected subsystem *Q*_{*n*1,2*c*} after the realization of said n₁-th local Positive Operator Valued Measure on said first subsystem *Q*_{*n*1} in said previous iterative measurement step, and said method further comprises inferring the reduced density operator of the at least one connected subsystem *Q*_{*n*1,2*c*} in the second iterative measurement step on the basis of said measurement outcome *m*_{*n*1*,n*1,2*c*} which is obtained when realizing the n₁-th local Positive Operator Valued Measure on said first subsystem *Q*_{*n*1} in said previous iterative measurement step. According to this embodiment, the at least one connected subsystem *Q*_{*n*1,2*c*} is the connected subsystem of the first and second subsystems *Q*_{*n*1}, *Q*_{*n*2}, and thus used twice as an ancilla system for implementing the n₁-th and the n₂-th local POVM on the subsystems *Q*_{*n*1} and *Q*_{*n*2}.

For the subsystem *Qₙ*, the measurement operators of the associated joint quantum measurement are not limited, in principle. In one embodiment, the plurality of measurement operators ${M}_{{m}_{n , {n}_{c}}}^{\left(n, {n}_{c}\right)}$ for at least one subsystem *Qₙ*, and preferably the measurement operators for each subsystem *Qₙ*, describe a potentially imperfect realization of a projective measurement, and preferably said measurement operators ${M}_{{m}_{n , {n}_{c}}}^{\left(n, {n}_{c}\right)}$ describe a realization of a projective measurement. For example, the measurement operator ${M}_{{m}_{n , {n}_{c}}}^{\left(n, {n}_{c}\right)}$ may be a projector on an eigenstate |*mₙ, m_{nc}*〉 of the joint system of the subsystem *Qₙ* and the connected subsystem *Q_{nc}.*

In a further embodiment the joint quantum measurement for at least one subsystem *Qₙ*, and preferably for each subsystem, may be a local quantum measurement with respect to the subsystem *Qₙ* and the at least one connected subsystem *Q_{nc}* of said joint system so that each measurement operator ${M}_{{m}_{n , {n}_{c}}}^{\left(n, {n}_{c}\right)}$ of said plurality is a tensor product of measurement operators, ${M}_{{m}_{n , {n}_{c}}}^{\left(n, {n}_{c}\right)} = {M}_{{m}_{n}}^{\left(n\right)} ⊗ {M}_{{m}_{{n}_{c}}}^{\left({n}_{c}\right)}$, wherein ${M}_{{m}_{n}}^{\left(n\right)}$ is a measurement operator of a first quantum measurement defined on the subsystem *Qₙ* with associated measurement outcome mₙ and ${M}_{{m}_{{n}_{c}}}^{\left({n}_{c}\right)}$ is a measurement operator of a second quantum measurement defined on the at least one connected subsystem *Qₙ* with associated measurement outcome *m_{nc},* and preferably the quantum measurement is local respect to each subsystem of said joint system, i.e., the measurement operators ${M}_{{m}_{n , {n}_{c}}}^{\left(n, {n}_{c}\right)}$ are tensor products of measurement operators of quantum measurements on each subsystem of said joint system.

I.e., the first quantum measurement on the subsystem Qₙ is defined by measurement operators ${M}_{{m}_{n}}^{\left(n\right)}$ that fulfil ${\sum }_{{m}_{n}} {M}_{{m}_{n}}^{\left(n\right) †} {M}_{{m}_{n}}^{\left(n\right)} = 1$, and the second quantum measurement on the at least one connected subsystem *Q_{nc}* is defined by measurement operators that fulfil ${\sum }_{{m}_{{n}_{c}}} {M}_{{m}_{{n}_{c}}}^{\left({n}_{c}\right) †} {M}_{{m}_{{n}_{c}}}^{\left({n}_{c}\right)} = 1$. When there are N_{c} connected subsystems *Qₙ*, e.g., the subsystems Qₖ with k = 1, ..., N_{c}, for the subsystem Qₙ, the measurement on these connected subsystems is preferably described by N_{c} local quantum measurements, i.e., ${M}_{{m}_{{n}_{c}}}^{\left({n}_{c}\right)} = {⊗}_{k = 1}^{{N}_{c}} {{M}^{˜}}_{{m}_{k}}^{\left(k\right)}$, wherein ${{M}^{˜}}_{{m}_{k}}^{\left(k\right)}$ is a measurement operator of a quantum measurement on the subsystem Qₖ with measurement outcome *mₖ*, i.e., ${\sum }_{{m}_{k}} {{M}^{˜}}_{{m}_{k}}^{\left(k\right) †} {{M}^{˜}}_{{m}_{k}}^{\left(k\right)} = 1$. Local measurements are defined, for the general case of POVMs, in G. Aubrun an C. Lancien, "Locally restricted measurements on a multipartite quantum system: data hiding is generic", QIC, Vol. 15, No. 5-6, 512--540 (2015).

In one preferred example, the joint quantum measurement for the subsystem Qₙ is a local projective measurement, wherein each measurement operator ${M}_{{m}_{n}}^{\left(n\right)}$ is a projector on an eigenstate |*mₙ*〉 of the subsystem *Qₙ*, and each measurement operator ${M}_{{m}_{{n}_{c}}}^{\left({n}_{c}\right)}$ is a projector on an eigenstate |*m_{nc}*〉 of the at least one connected subsystem *Q_{nc}.*

In a further embodiment of the method according to the present invention, said realization of said joint unitary operation *U_{n,nc}* may be a perfect realization of said joint unitary operation *U_{n,n}* for at least one subsystem *Qₙ*, and preferably for each subsystem *Qₙ*.

In one embodiment, the method may further comprise for at least one, and preferably for each initially or iteratively selected subsystem *Qₙ*:
a. providing the following input to a classical computer:
   the measurement outcome *m_{n,nc}* and a representation of the associated measurement operator ${M}_{{m}_{n , {n}_{c}}}^{\left(n, {n}_{c}\right)}$*;*
   a representation of a quantum channel *E_{n,nc}* describing the potentially imperfect realization of said joint unitary operation *U_{n,nc}*;

   a representation of the reduced density operator *ρₙ* of said at least one connected subsystem *Q_{nc}*;
   a representation of basis operators ${B}_{{a}_{n}}^{\left(n\right)}$ of a local orthonormal basis of an operator space associated with a Hilbert space Hₙ of said subsystem *Qₙ*;
b. calculating, by the classical computer, a representation of a local effect ${\prod }_{{m}_{n , {n}_{c}}}^{\left(n, {n}_{c}\right)} = {\sum }_{{a}_{n}} {π}_{{a}_{n}}^{\left(n, {n}_{c}, {m}_{n , {n}_{c}}\right)} {B}_{{a}_{n}}^{\left(n\right)}$ associated with the local Positive Operator Valued Measure realized on said selected subsystem *Qₙ*, wherein the coefficients ${π}_{{a}_{n}}^{\left(n, {n}_{c}, {m}_{n , {n}_{c}}\right)} = tr \left[{M}_{{m}_{n , {n}_{c}}}^{\left(n, {n}_{c}\right)}{E}_{n , {n}_{c}}\left({B}_{{a}_{n}}^{\left(n\right)}⊗{ρ}_{{n}_{c}}\right){M}_{{m}_{n , {n}_{c}}}^{\left(n, {n}_{c}\right) †}\right]$ are given by a trace over a product of an image of a tensor product of the basis operator ${B}_{{a}_{n}}^{\left(n\right)}$ and the reduced density operator *ρ_{nc}* under the quantum channel *E_{n,nc},* and the measurement operator ${M}_{{m}_{n , {n}_{c}}}^{\left(n, {n}_{c}\right)}$ and its hermitian conjugate.

The representation of the calculated local effect ${Π}_{{m}_{n , {n}_{c}}}^{\left(n, {n}_{c}\right)}$ may be output by the classical computer. Additionally, or alternatively, an expectation value of an observable quantity O⁽ⁿ⁾ defined on the subsystem *Qₙ* may be calculated using the representation of the local effect, as has been explained above.

According to a second aspect of the present invention, there is provided Quantum computing device, said quantum computing device comprising a composite system comprising a plurality of quantum mechanical subsystems Qₙ, n=1, ..., N, N≥2, said quantum mechanical subsystems being preferably qubits, and said quantum computing device having a connectivity and operativity that allows to implement for each of said subsystems Qₙ a potentially imperfect realization of a joint unitary operation *U_{nnc}* and a joint quantum measurement on a joint system of said subsystem Qₙ and at least one connected subsystem *Q_{nc}* of said plurality of subsystems, said realization of said joint quantum measurement being described by a plurality of measurement operators ${M}_{{m}_{n , {n}_{c}}}^{\left(n, {n}_{c}\right)}$, each measurement operator ${M}_{{m}_{n , {n}_{c}}}^{\left(n, {n}_{c}\right)}$ being associated with a measurement outcome *m_{n,nc}*,
said quantum computing device further comprising means for realizing an n₀-th local Positive Operator Valued Measure on at least one initially selected subsystem *Q*_{*n*0} to thereby obtain a measurement outcome *m*_{*n*0}, and a controller,
wherein said quantum computing device is operative, by control of the controller, to implement an initial measurement step which comprises for at least one initially selected subsystem *Q*_{*n*0} the realization of the n₀-th local Positive Operator Valued Measure on said initially selected subsystem *Q*_{*n*0} to thereby obtain the measurement outcome *m*_{*n*0} and to implement an iterative measurement step which comprises for at least one iteratively selected subsystem Qₙ a realization of an n-th local Positive Operator Valued Measure on said iteratively selected subsystem Qₙ by implementing, by operation of said quantum computing device, said potentially imperfect realization of said joint unitary operation *U_{n,nc}* followed by said joint quantum measurement described by said plurality of measurement operators ${M}_{{m}_{n , {n}_{c}}}^{\left(n, {n}_{c}\right)}$ on said joint system of said iteratively selected subsystem Qₙ and said at least one connected subsystem *Qₙ,* wherein said at least one connected subsystem *Q_{nc}* is in a previously determined quantum state described by a density operator *ρ_{nc},* to thereby obtain a measurement outcome *m_{n,nc}*,
wherein for at least one iteratively selected subsystem Qₙ at least one of said connected subsystems *Q_{nc},* and preferably each of said connected subsystems *Q_{nc},* is one of said at least one initially selected subsystems *Q*_{*n*0}.

The quantum computing device according to the second aspect of the present invention is configured to implement the method according to the first aspect of the present invention. Everything that has been said above in relation to the method of the first aspect also applied to the apparatus of the second aspect.

In the following, the invention is explained in greater detail by way of example with reference to the drawings. In the drawings,
- Fig. 1: depicts a schematic representation of a system comprising an embodiment of a quantum computing device according to the second aspect of the present invention and a classical computer,
- Fig. 2: depicts a quantum circuit for implementing a first embodiment of the method according to the first aspect of the present invention, and
- Fig. 3: schematically depicts the implementation of said quantum circuit on a system of five qubits arranged in a linear topology,
- Fig. 4: depicts a quantum circuit for implementing a second embodiment of the method according to the first aspect of the present invention,
- Fig. 5a-5c: schematically represents the iterative selection of subsystems of a composite system according to an embodiment of the method according to the first aspect of the present invention,
- Fig. 6a-6e: schematically represents the iterative selection of subsystems of a composite system according to another embodiment of the method according to the first aspect of the present invention.

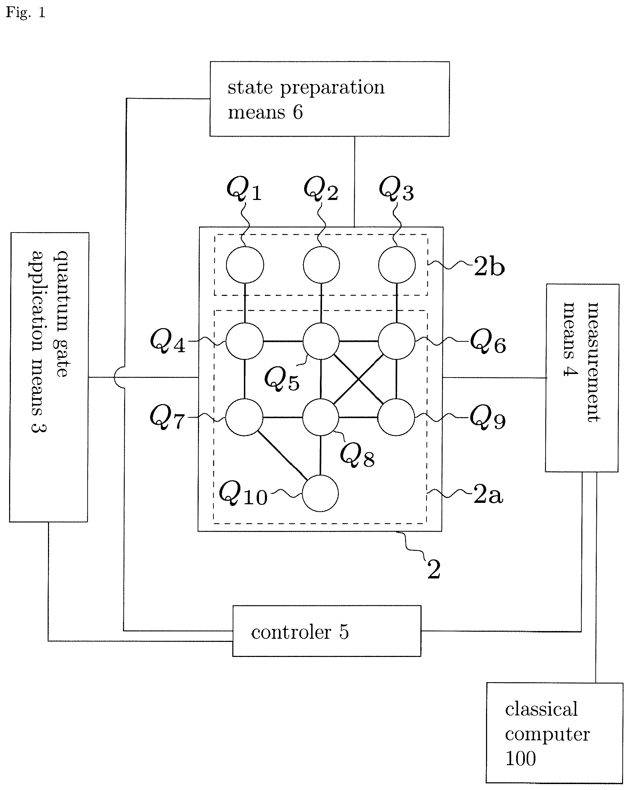

Fig. 1 depicts a schematic representation of a system comprising an embodiment of a quantum computing device 1 according to the second aspect of the present invention and a classical computer 100. The quantum computing device 1 comprises a composite system 2 of a plurality of N=10 quantum mechanical subsystems Qₙ indicated by circles in Fig. 1. For illustrative purposes, it is assumed in the following that each quantum mechanical subsystem Qₙ is a qubit, but the invention is not limited to this. Each qubit is a two-level system wherein one of the two states may be denoted by the pure state vector |0〉 and the other state may be denoted by the pure state vector |1〉.

The quantum mechanical subsystems Qₙ of said plurality are partitioned in a system subset 2a consisting of the qubits Q₄, ..., Q₁₀ and an ancillary subset 2b consisting of the qubits Q₁, Q₂, Q₃.

The quantum computing device 1 according to the second aspect of the present invention has a connectivity and operativity that allows to implement for each of said subsystems Qₙ, by control of a controller 5 of the quantum computing device 1, a potentially imperfect realization of a joint unitary operation *U_{n,n}* and a joint quantum measurement on a joint system of said subsystem Qₙ and at least one connected subsystem *Q_{nc}* of said plurality of subsystems, said realization of said joint quantum measurement being described by a plurality of measurement operators ${M}_{{m}_{n , {n}_{c}}}^{\left(n, {n}_{c}\right)}$, each measurement operator ${M}_{{m}_{n , {n}_{c}}}^{\left(n, {n}_{c}\right)}$ being associated with a measurement outcome *m_{n,nc}.* To this end, the embodiment of the quantum computing device 1 shown in Fig. 1 comprises quantum gate application means 3 and measurement means 4.

The quantum gate application means 3 is operative, by control of the controller 5, to implement a potentially imperfect realization of a single-qubit unitary operation ${U}_{n}^{\left(1\right)}$ on each of said qubits, and a two-qubit unitary operation ${U}_{n , n}^{\left(2\right)}$ on a joint system of two qubits Qₙ and Q_{n'} which are connected by a solid line in Fig. 1.

The measurement means 4 is operative, by control of the controller 5, to implement for each subsystem Qₙ a local quantum measurement described by a plurality of measurement operators ${M}_{{m}_{n}}^{\left(n\right)}$ with associated measurement outcome *mₙ.* In one example, the measurement operators ${M}_{{m}_{n}}^{\left(n\right)}$ are projectors on the eigenstates |*mₙ*〉, mₙ =n 0.1, of the respective qubit.

For the embodiment shown in Fig. 1, the at least one connected subsystem, the joint unitary operation and the measurement operators of the joint quantum measurement of each subsystem Qₙ in the system subset 2a may be as shown in Table 1 in one example, wherein ${1}_{n}$, denotes the identity operation on the subsystem *Qₙ*,:

| subsystem | connected subsystem(s) | joint unitary operation | joint quantum measurement |
|---|---|---|---|
| Q₄ | Q₁ | ${U}_{4 , 1} = {U}_{4 , 1 ,}^{\left(2\right)}$ | ${M}_{{m}_{4 , 1}}^{\left(4, 1\right)} = {M}_{{m}_{4}}^{\left(4\right)} ⊗ {M}_{{m}_{1}}^{\left(1\right)}$ |
| Q₅ | Q₂ | ${U}_{5 , 2} = {U}_{5 , 2}^{\left(2\right)}$ | ${M}_{{m}_{5 , 2}}^{\left(5, 2\right)} = {M}_{{m}_{5}}^{\left(5\right)} ⊗ {M}_{{m}_{2}}^{\left(2\right)}$ |
| Q₆ | Q₃ | ${U}_{6 , 3} = {U}_{6 , 3}^{\left(2\right)}$ | ${M}_{{m}_{6 , 3}}^{\left(6, 3\right)} = {M}_{{m}_{6}}^{\left(6\right)} ⊗ {M}_{{m}_{3}}^{\left(3\right)}$ |
| Q₇ | Q₄, Q₁ | ${U}_{7 , 41} = \left({U}_{7 , 4}^{\left(2\right)}⊗{1}_{1}\right) \left(\begin{matrix}{1}_{7} \\ ⊗ {U}_{4 , 1}^{\left(2\right)}\end{matrix}\right)$ | $\begin{matrix}{M}_{{m}_{7 , 4 , 1}}^{\left(7, 4, 1\right)} = \\ {M}_{{m}_{7}}^{\left(7\right)} ⊗ {M}_{{m}_{4}}^{\left(4\right)} ⊗ {M}_{{m}_{1}}^{\left(1\right)}\end{matrix}$ |
| Q₈ | Q₅ | ${U}_{8 , 5} = {U}_{5 , 8}^{\left(2\right)}$ | ${M}_{{m}_{8 , 5}}^{\left(8, 5\right)} = {M}_{{m}_{8}}^{\left(8\right)} ⊗ {M}_{{m}_{5}}^{\left(5\right)}$ |
| Q₉ | Q6, Q5 | ${U}_{9 , 65} = \left({U}_{9 , 6}^{\left(2\right)}⊗{1}_{5}\right) \left(\begin{matrix}{1}_{9} \\ ⊗ {U}_{6 , 5}^{\left(2\right)}\end{matrix}\right)$ | $\begin{matrix}{M}_{{m}_{9 , 6 , 5}}^{\left(9, 6, 5\right)} = \\ {M}_{{m}_{9}}^{\left(9\right)} ⊗ {M}_{{m}_{6}}^{\left(6\right)} ⊗ {M}_{{m}_{5}}^{\left(5\right)}\end{matrix}$ |
| Q₁₀ | Q₇, Q₈, Q₉ | $\begin{matrix}{U}_{10 , 987} \\ = \left(\begin{matrix}{U}_{10 , 7}^{\left(2\right)} ⊗ {1}_{9} \\ ⊗ {1}_{8}\end{matrix}\right) \left(\begin{matrix}{U}_{10 , 8}^{\left(2\right)} ⊗ {1}_{9} \\ ⊗ {1}_{7}\end{matrix}\right) \left(\begin{matrix}{U}_{8 , 7}^{\left(2\right)} ⊗ {1}_{10} \\ ⊗ {1}_{9}\end{matrix}\right) \left({U}_{9 , 8}^{\left(2\right)}⊗{1}_{10}⊗{1}_{7}\right)\end{matrix}$ | $\begin{matrix}{M}_{{m}_{10 , 9 , 8 , 7}}^{\left(10, 9, 8, 7\right)} = \\ {M}_{{m}_{10}}^{\left(10\right)} ⊗ {M}_{{m}_{9}}^{\left(9\right)} ⊗ {M}_{{m}_{8}}^{\left(8\right)} \\ ⊗ {M}_{{m}_{7}}^{\left(7\right)}\end{matrix}$ |

The system subset 2a comprises three starting subsystems Q₄, Q₅, Q₆, and the ancillary subset 2b comprises for each of said starting subsystem Qᵢ₊₃, i=1, 2, 3, one connected subsystem Qᵢ.

The embodiment of the quantum computing device 1 shown in Fig. 1 further comprises state preparation means 6 operative, by control of the controller 5, to prepare each of said qubits in a desired initial state. For example, the state preparation means 6 may be operative to prepare each of said qubits Qₙ in the pure state described by the state vector |0〉.

The quantum computing device 1 shown in Fig. 1 may be further operative to prepare the composite system of the system qubits in the system subset 2a in a desired solution state. E.g., the quantum computing device 1 may be operative to first prepare each qubit in said system subset 2a in the pure state described by the state vector |0〉, and to then apply a sequence of quantum gates by application of the quantum gate application means 3 thereby obtaining a desired solution state of the composite system described by a density operator *ρ_{S}.* Furthermore, the quantum computing device 1 may be operative, by control of the controller 5, to prepare each qubit in the ancillary subset 2b in the pure state described by the state vector |0〉.

Thus, by control of the controller 5, the quantum computing device 1 may prepare a system quantum state which is described by a density operator which is a tensor product of the density operator of the desired solution state of the system qubits and a density operator of the state of the ancilla qubits, all of which are in the state described by the state vector |0〉.

The quantum computing device 1 according to the second aspect of the present invention is further operative, by control of the controller 5, to implement an initial measurement step which comprises for at least one initially selected subsystem *Q*_{*n*0} the realization of the n₀-th local Positive Operator Valued Measure on said initially selected subsystem *Q*_{*n*0} to thereby obtain the measurement outcome *m*_{*n*0}. For the embodiment shown in Fig. 1, there are three initially selected subsystems, namely the three starting qubits Q₄, Q₅ and Q₆. For each starting qubit Qᵢ₊₃, i=1, 2, 3, the realization of the respective nᵢ₊₃-th local Positive Operator Valued Measure is by implementing the respective imperfect realization of the joint unitary operation *U*_{*i*+3},*ᵢ* on the joint system of the qubit Qᵢ₊₃ and the one connected subsystem Qᵢ in the ancillary subset 2b followed by a joint quantum measurement on the joint system described by the plurality of measurement operators ${M}_{{m}_{i + 3 , i}}^{\left(i+3,i\right)} = {M}_{{m}_{i + 3}}^{\left(i+3\right)} ⊗ {M}_{{m}_{i}}^{\left(i\right)}$ to thereby obtain a measurement outcome *m*_{*i*+3,*i*} = (*m*_{*i*+3}, *mᵢ*)*.*

Furthermore, the quantum computing device 1 according to the second aspect of the present invention is operative, by control of the controller 5, to implement an iterative measurement step which comprises for at least one iteratively selected subsystem Qₙ a realization of an n-th local Positive Operator Valued Measure on said iteratively selected subsystem Qₙ by implementing, by operation of said quantum computing device 1, said potentially imperfect realization of said joint unitary operation *U_{n,nc}* followed by said joint quantum measurement described by said plurality of measurement operators ${M}_{{m}_{n , {n}_{c}}}^{\left(n, {n}_{c}\right)}$ on said joint system of said iteratively selected subsystem Qₙ and said at least one connected subsystem *Q_{nc},* wherein said at least one connected subsystem *Q_{nc}* is in a previously determined quantum state described by a density operator *ρ_{nc},* to thereby obtain a measurement outcome *m_{nnc}*, wherein for at least one iteratively selected subsystem Qₙ at least one of said connected subsystems *Q_{nc},* and preferably each of said connected subsystems *Q_{nc}*, is one of said at least one initially selected subsystems *Q*_{*n*0}.

For the embodiment shown in Fig.1, the qubits Q₇ and Q₈ may be iteratively selected in a first iterative measurement step, Q₉ may be iteratively selected in a subsequent second iterative measurement step and Q₁₀ may be iteratively selected in a final, third iterative measurement step. The connected subsystems of the iteratively selected qubits, the respective joint unitary operations and joint quantum measurements are given in the table above. The state of the at least one connected qubit of each iteratively selected qubit (e.g., Q₅ and Q₆ for the iteratively selected subsystem Q₉) is a previously determined quantum state. In one example, the previously determined quantum state is a predetermined quantum state (e.g., each connected qubit is prepared in the state |0〉 before the application of the joint unitary operation). In another example, the previously determined quantum state is the state of the connected subsystem(s) after the realization of the corresponding local POVM on said connected subsystem in a previous initial or iterative measurement step.

The result of the implementation of the measurement steps is a sequence of measurement outcomes m=(*m*_{4,1}, *m*_{5,2}, *m*_{6,3}, *m*_{7,41}, *m*_{8,5}, *m*_{9,65}, *m*_{10,987}).

For each subsystem Qₙ in the system subset 2a, the following input may be provided to the classical computer 100 for classical postprocessing (as an example, the input for the subsystem Q₇ is given in parentheses):
- The measurement outcome *m_{n,nc}* (*m*_{7,41}) and a representation of the associated measurement operator ${M}_{{m}_{n , {n}_{c}}}^{\left(n, {n}_{c}\right)} \left({M}_{{m}_{7 , 4 , 1}}^{\left(7, 4, 1\right)}={M}_{{m}_{7}}^{\left(7\right)}⊗{M}_{{m}_{4}}^{\left(4\right)}⊗{M}_{{m}_{1}}^{\left(1\right)}\right)$;
- A representation of a quantum channel *E_{nnc}* describing the potentially imperfect realization of said joint unitary operation ${U}_{n , {n}_{c}} \left({U}_{7 , 41}=\left({U}_{7 , 4}^{\left(2\right)}⊗{1}_{1}\right)\left({1}_{7}⊗{U}_{4 , 1}^{\left(2\right)}\right)\right)$;
- A representation of the reduced density operator *ρ_{nc}*(*ρ*₄₁) of said at least one connected subsystem *Q*_{*nc*;}
- A representation of basis operators ${B}_{{a}_{n}}^{\left(n\right)}$ of a local orthonormal basis of an operator space associated with a Hilbert space Hₙ of said subsystem Qₙ. In the case of qubits, the basis operators may be, e.g., the Pauli matrices and the identity.

Then, the classical computer 100 may be programmed to calculate a representation of a local effect ${\prod }_{{m}_{n , {n}_{c}}}^{\left(n, {n}_{c}\right)} = {\sum }_{{a}_{n}} {π}_{{a}_{n}}^{\left(n, {n}_{c}, {m}_{n , {n}_{c}}\right)} {B}_{{a}_{n}}^{\left(n\right)}$ associated with the local Positive Operator Valued Measure realized on said selected subsystem Qₙ, wherein the coefficients ${π}_{{a}_{n}}^{\left(n, {n}_{c}, {m}_{n , {n}_{c}}\right)} = tr \left[{M}_{{m}_{n , {n}_{c}}}^{\left(n, {n}_{c}\right)}{E}_{n , {n}_{c}}\left({B}_{{a}_{n}}^{\left(n\right)}⊗{ρ}_{{n}_{c}}\right){M}_{{m}_{n , {n}_{c}}}^{\left(n, {n}_{c}\right) †}\right]$ are given by a trace over a product of an image of a tensor product of the basis operator ${B}_{{a}_{n}}^{\left(n\right)}$ and the reduced density operator *ρ_{nc}* under the quantum channel *E_{nnc},* and the measurement operator ${M}_{{m}_{{nn}_{c}}}^{\left({nn}_{c}\right)}$.

Thereby, one may derive the global effect ${Π}_{m} = {⊗}_{n = 4}^{10} {Π}_{{m}_{n , {n}_{c}}}^{\left(n, {n}_{c}\right)}$ applied to the solution state.

When the quantum measurement is repeated S times, i.e., the system quantum state is prepared S times, and the measurement routine of the initial and iterative measurement steps is applied to each of said prepared system quantum states, the global effect ${Π}_{{m}_{s}} = {⊗}_{n = 4}^{10} {Π}_{{m}_{n , {n}_{c}}^{\left(s\right)}}^{\left(n, {n}_{c}\right)}$ applied to the solution state in the s-th repetition may be derived as has been explained above, wherein ${m}_{{nn}_{c}}^{\left(s\right)}$ is the measurement outcome for the n-th qubit Qₙ in the s-th repetition. When for every qubit Qₙ in the system subset 2a the n-th local POVM is informationally complete, the quantum measurement described by the global effects Π*ₘₛ* is also informationally complete. Then, each observable O which is defined on the system qubits may be expressed in terms of these global effects according to 0 = Σ*ₘωₘ*Π*ₘ,* and an estimator for the observable O may be obtained via the formula $\overline{O} = \frac{1}{S} {\sum }_{s = 1}^{S} {ω}_{{m}_{s}}$. The value of the estimator may be calculated by the classical computer.

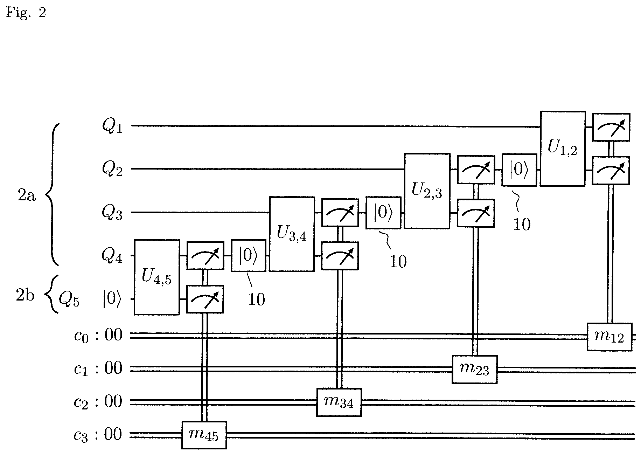

Fig. 2 depicts a quantum circuit for implementing a first embodiment of the method according to the first aspect of the present invention. The quantum circuit is applied to a composite system of 5 qubits Q₁,...,Q₅. The qubits are partitioned in a system subset 2a of system qubits consisting of the qubits Q₁, ..., Q₄, and in an ancillary subset 2b of one ancillary qubit Q₅. The ancillary qubit Q₅ is prepared in the quantum state described by the state vector |0〉, and the system qubits are in a desired solution state.

As one may take from Fig. 2, the quantum circuit comprises the application of potentially imperfect two-qubit unitary operations Uₙ, ₙ₊₁, n = 1, ..., 4 and local two-qubit measurements described by measurement operators ${M}_{{m}_{n , n + 1}}^{\left(n,n+1\right)} = {M}_{{m}_{n}}^{\left(n\right)} ⊗ {M}_{{m}_{n + 1}}^{\left(n+1\right)}$ on the joint system of qubit Qₙ and qubit Qₙ₊₁, wherein the measurement operators ${M}_{{m}_{n}}^{\left(n\right)} , {M}_{{m}_{n + 1}}^{\left(n+1\right)}$ act on the qubit Qₙ, Qₙ₊₁, respectively. The measurement operators ${M}_{{m}_{n}}^{\left(n\right)}$ are projective measurement operators on the quantum states |0〉 and |1〉, respectively with associated measurement outcome *mₙ* = 0 for the state |0〉 and *mₙ* = 1 for the state |1〉.

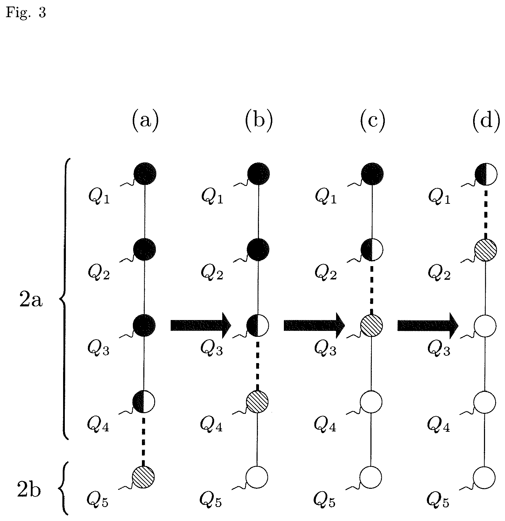

The quantum circuit shown in Fig. 2 realizes the method according to the present invention as follows:
The application of the potentially imperfect realization of the joint unitary operation U_{4,5} on the joint system of the qubit Q₅ prepared in the state described by the state vector |0〉 and the system qubit Q₄ followed by the joint quantum measurement of said joint system with measurement operators ${M}_{{m}_{4 , 5}}^{\left(4, 5\right)} = \left|{m}_{4}, {m}_{5}\right〉 \left〈{m}_{4}, {m}_{5}\right|$ results in a measurement outcome *m*_{4,5} = (*m*₄, *m*₅) *mᵢ* ∈ {0,1}which is provided to a classical computer and stored in two classical bits c₃ which are initially in the state 00. I.e., c₃ is set to *m*₄*m*₅. In this way, the initial measurement step is realized for the initially selected subsystem Q₄, thereby realizing the 4-th local POVM on the subsystem Q₄. The implementation of the initial measurement step is also shown schematically in Fig. 3a.

Next, for the qubits Qᵢ, i=3, 2, 1, the iterative measurement step is iteratively applied. First, a reset operation 10 is applied to the connected qubit Qᵢ₊₁, of the iteratively selected qubit Qᵢ, so that the qubit Qᵢ₊₁ is in the quantum state described by the state vector |0〉. Then, the potentially imperfect realization of the joint unitary operation U_{i,i+1} is applied to the joint system of the qubit Qᵢ and its one connected subsystem Qᵢ₊₁ followed by the application of the joint quantum measurement described by the measurement operators ${M}_{{m}_{i , i + 1}}^{\left(i,i+1\right)} = \left|{m}_{i}, {m}_{i + 1}\right〉 \left〈{m}_{i}, {m}_{i + 1}\right|$ resulting in a measurement outcome *m*_{*i i*+1} = (*mᵢ, m*_{*i*+1}). This measurement outcome is provided to the classical computer and stored in two classical bits cᵢ₊₁ which are initialized in the state 00. The implementation of the iterative measurement steps is also shown schematically in Fig. 3 (b) - (d).

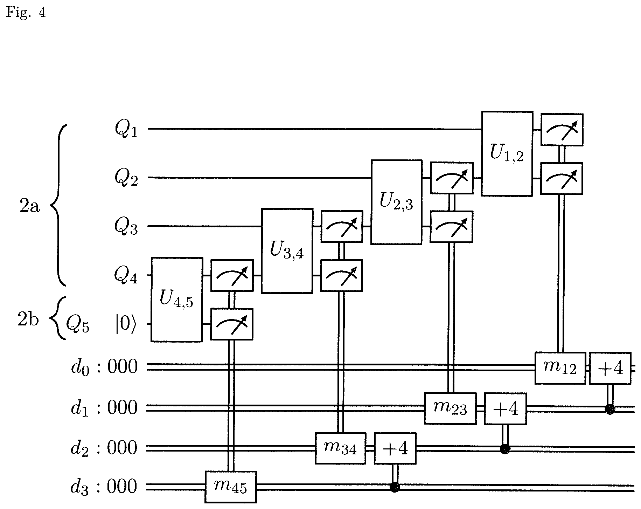

Fig. 4 depicts a quantum circuit for implementing a second embodiment of the method according to the first aspect of the present invention. As one may take from the comparison of the quantum circuits shown in Fig. 2 and Fig. 4, the quantum circuit of Fig. 4 differs from the quantum circuit of Fig. 2 in that no reset operation is applied in the iterative measurement steps and it further differs in the storing of the measurement outcome m_{i,i+1}. More precisely, the measurement outcome m_{i,i+1} is stored in three classical bits dᵢ₋₁ and is stored as the value m_{i,i+1} + 4 if the measurement outcome for the system Qᵢ₊₁ in the preceding measurement step was mᵢ₊₁ = 1, and it is stored as the measurement outcome m_{i,i+1} if the measurement outcome for the subsystem Qᵢ₊₁ in the preceding measurement step was *m*_{*i*+1} = 0.

For the embodiment shown in Fig. 4 it is assumed that the joint unitary operations are realized perfectly. Then, the POVM with effects ${Π}_{{m}_{4 , 5}}^{\left(0\right)} ⊗ {Π}_{{m}_{3 , 4}}^{\left({m}_{4 , 5}\right)} ⊗ {Π}_{{m}_{2 , 3}}^{\left({m}_{3 , 4}\right)} ⊗ {Π}_{{m}_{1 , 2}}^{\left({m}_{2 , 3}\right)}$ is realized, wherein ${Π}_{{m}_{i , i + 1}}^{\left({m}_{i + 1 , i + 2}\right)} = {Σ}_{{a}_{i}} {π}_{{a}_{i}}^{\left({m}_{i , i + 1}, {m}_{i + 1 , i + 2}\right)} {B}_{{a}_{i}}^{\left(i\right)}$ with coefficients ${π}_{{a}_{i}}^{\left({m}_{i , i + 1}, {m}_{i + 1 , i + 2}\right)} = tr \left[{U}_{i , i + 1}\left({B}_{{a}_{i}}^{\left(i\right)}⊗\left|{m}_{i + 1}\right〉\left〈{m}_{i + 1}\right|\right){U}_{i , i + 1}^{†}\left|{m}_{i}, {m}_{i + 1}\right〉\left〈{m}_{i}, {m}_{i + 1}\right|\right]$ and ${B}_{{a}_{i}}^{\left(i\right)}$ are basis operators of a local orthonormal basis of an operator space associated with a Hilbert space Hᵢ of the qubit Qᵢ.

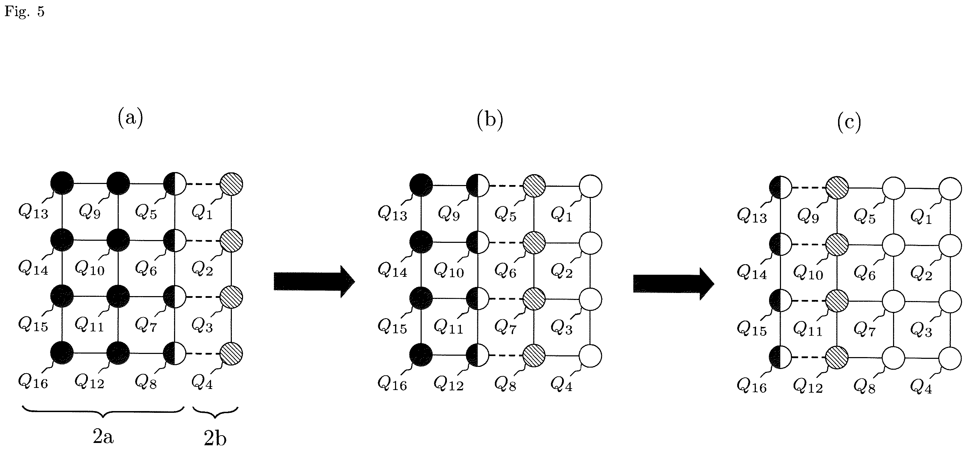

Fig. 5 schematically represents the iterative selection of subsystems of a composite system of an embodiment of a quantum computing device according to the present invention. The composite system shown in Fig. 5 comprises 16 subsystems Qₙ with a square lattice connectivity. I.e., the quantum computing device is operative to implement a joint unitary operation and a joint quantum measurement on a joint system of two neighbouring subsystems Qₙ and Qₙ on the lattice (e.g., Q₆ and Q₁₀ or Q₆ and Q₅). The subsystems are divided in a set of system subsystems Q₅, ..., Q₁₆ with starting subsystems Q₅, ..., Q₈ and a set of ancillary subsystems Q₁, ..., Q₄.

The embodiment of the method shown in Fig. 5 starts with an initial measurement step wherein for each of the starting subsystems Qᵢ₊₄, i=1, ..., 4, an (i+4)-th local POVM is realized on said starting subsystem by implementing the joint local unitary operation U_{i+4,i} followed by a joint quantum measurement on the joint system of the starting subsystem Qᵢ₊₄ and its one connected subsystem Qᵢ. Next, two iterative measurement steps are implemented. In the first iterative measurement step, the (i+8)-th local POVM is implemented on the iteratively selected subsystems Qᵢ₊₈, i=1, ...4 by implementing the joint local unitary operation U_{i+8,i+4} followed by a joint quantum measurement on the joint system of the iteratively selected subsystem Qᵢ₊₈ and its one connected subsystem Qᵢ₊₄. Then, in the last iterative measurement step, the (i+12)-th local POVM is implemented on the iteratively selected subsystems Qᵢ₊₁₂, i=1, ...4 by implementing the joint local unitary operation U_{i+12,i+8} followed by a joint quantum measurement on the joint system of the iteratively selected subsystem Qᵢ₊₁₂ and its one connected subsystem Qᵢ₊₈. In this way local POVMs may be efficiently implemented on the twelve subsystems Qᵢ, i=5, ..., 16 in three time steps using only four ancillary qubits.

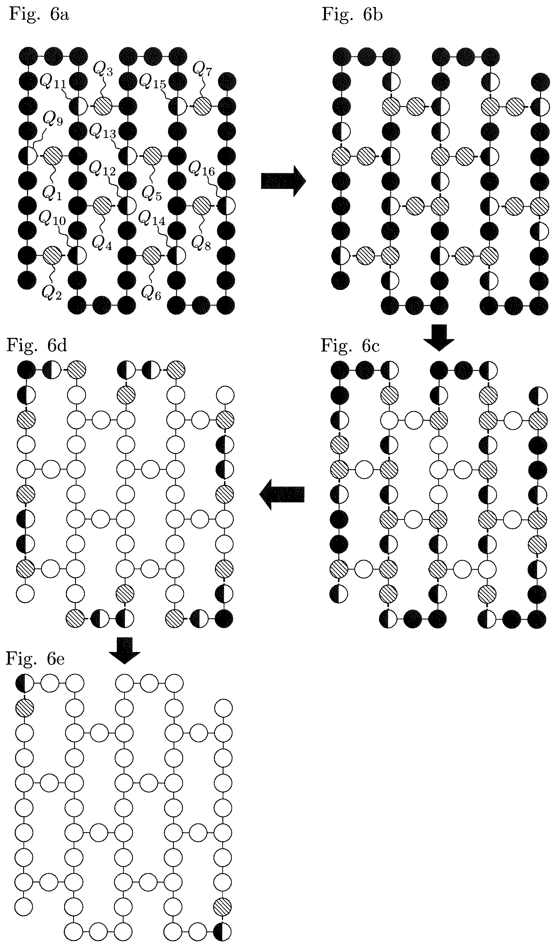

Figs. 6a - 6e schematically represent another example of the method according to the first aspect of the present invention with an iterative selection of subsystems Qₙ of a composite system of a quantum computing device as indicated in the figures. The composite system consists of 65 subsystems Qₙ illustrated as circles in Figs. 6a - 6e with a hexagonal connectivity. I.e., for subsystems Qₙ, Qₙ. connected by a line, the quantum computing device is operative to implement a potentially imperfect realization of a joint unitary operation followed by a joint quantum measurement on the joint system of the subsystem Qₙ and its connected subsystem Qₙ, as explained above. The above method may be realized, e.g., with the IBM Quantum 65-qubit *ibmq_manhattan* device (see, e.g., G. Mooney et. al., Advanced Quantum Technologies Vol 4, Issue 10).

The system is divided in 8 ancillary subsystems (qubits) Q₁, ..., Q₈ and 57 system qubits Q₉ - Q₆₅ (reference signs are omitted for sake of clarity) as indicated in Fig. 6a. In Figs. 6a - 6e, the initially or iteratively selected subsystems are indicated as hatched circles, and the respective connected subsystems are indicated by a half-filled circle connected with the selected subsystem by a dashed line.

According to the method of Figs. 6a - 6e, the method starts with the initial measurement step wherein a local POVM is implemented on the system qubits (starting qubits) Q₉, ...Q₁₆ by implementing the potentially imperfect realization of the joint unitary operation followed by the joint quantum measurement on the joint system of the initially selected qubits Oᵢ₊₈, i=1...,8, and the respective connected subsystem Qᵢ. In this way, an (i+8)-th local POVM is realized on the qubit Oᵢ₊₈,

Figs. 6b - 6e illustrate the subsequent four iterative measurement steps. White circles indicate qubits for which the local POVM has been realized in a previous measurement step or ancillary qubits not used in the current iterative measurement step and which are not connected subsystems in the present iterative measurement step. 16 local POVMs are simultaneously realized in the first iterative measurement step shown in Fig. 6b, 19 local POVMs are simultaneously realized in the second iterative measurement step shown in Fig. 6c, 12 local POVMs are simultaneously realized in the third iterative measurement step shown in Fig. 6d and 2 local POVMs are simultaneously realized in the fourth iterative measurement step shown in Fig. 6e. In this way, 57 local POVMs are implemented on 57 qubits in a very time- and resource efficient manner in only five time steps.

## Claims

1. Method for implementing a quantum measurement on a system quantum state of a composite system (2) of a quantum computing device (1), said composite system (2) comprising a plurality of quantum mechanical subsystems Qₙ, n=1, ..., N, N≥2, and said quantum computing device (1) having a connectivity and operativity that allows to implement for each of said subsystems Qₙ a potentially imperfect realization of a joint unitary operation *U_{n,nc}* and a joint quantum measurement on a joint system of said subsystem Qₙ and at least one connected subsystem *Q_{nc}* of said plurality of subsystems, said realization of said joint quantum measurement being described by a plurality of measurement operators ${M}_{{m}_{n , {n}_{c}}}^{\left(n, {n}_{c}\right)}$, each measurement operator ${M}_{{m}_{n , {n}_{c}}}^{\left(n, {n}_{c}\right)}$ being associated with a measurement outcome *m*_{*n*,*nc*},
wherein said method comprises:
an initial measurement step which comprises for at least one initially selected subsystem *Q*_{*n*0} a realization of an n₀-th local Positive Operator Valued Measure on said initially selected subsystem *Q*_{*n*0} to thereby obtain a measurement outcome *m*_{*n*0};
an iterative measurement step which comprises for at least one iteratively selected subsystem Qₙ a realization of an n-th local Positive Operator Valued Measure on said iteratively selected subsystem Qₙ by implementing, by operation of said quantum computing device (1), said potentially imperfect realization of said joint unitary operation *U_{n,nc}* followed by said joint quantum measurement described by said plurality of measurement operators ${M}_{{m}_{n , {n}_{c}}}^{\left(n, {n}_{c}\right)}$ on said joint system of said iteratively selected subsystem Qₙ and said at least one connected subsystem *Q_{nc}*, wherein said at least one connected subsystem *Q_{nc}* is in a previously determined quantum state described by a density operator *ρ_{nc}*, to thereby obtain a measurement outcome *m*_{*n*,*nc*},
wherein for at least one iteratively selected subsystem Qₙ at least one of said connected subsystems *Q_{nc}* is one of said at least one initially selected subsystems *Q*_{*n*0}.

2. Method according to claim 1, wherein said quantum mechanical subsystems *Qₙ* are qubits.

3. Method according to claims 1 or 2, wherein for at least one iteratively selected subsystem *Qₙ* each of said connected subsystems *Q_{nc}* is one of said at least one initially selected subsystems *Q*_{*n*0}.

4. Method according to anyone of the preceding claims, wherein said iterative measurement step is iterated, and wherein the connectivity of the quantum computing device (1) and the iteration is such that for at least one of the iteratively selected subsystems Qₙ the n_{c}-th local Positive Operator Valued Measure has been previously realized on at least one of said connected subsystems *Q_{nc}* of said at least one iteratively selected subsystem Qₙ in a previous initial or iterative measurement step.

5. Method according to claim 4, wherein said iterative measurement step is iterated, and wherein the connectivity of the quantum computing device (1) and the iteration is such that for at least one of the iteratively selected subsystems Qₙ the n_{c}-th local Positive Operator Valued Measure has been previously realized on each of said connected subsystems *Q_{nc}* of said at least one iteratively selected subsystem Qₙ in a previous initial or iterative measurement step.

6. Method according to claim 4 or 5, wherein said iterative measurement step is iterated, and wherein the connectivity of the quantum computing device (1) and the iteration is such that for each iteratively selected subsystem Qₙ the n_{c}-th local Positive Operator Valued Measure has been previously realized on at least one of said connected subsystems *Q_{nc}* of said at least one iteratively selected subsystem Qₙ in a previous initial or iterative measurement step.

7. Method according to claim 6, wherein said iterative measurement step is iterated, and wherein the connectivity of the quantum computing device (1) and the iteration is such that for each iteratively selected subsystem Qₙ, the n_{c}-th local Positive Operator Valued Measure has been previously realized on each of said connected subsystems *Q_{nc}* of said at least one iteratively selected subsystem Qₙ in a previous initial or iterative measurement step.

8. Method according to anyone of the preceding claims, wherein said iteration is terminated when for each subsystem Qₙ the respective n-th local Positive Operator Valued Measure has been realized.

9. Method according to anyone of the preceding claims, wherein said connectivity and said operativity of said quantum computing device (1) is such that for at least one subsystem Qₙ, the potentially imperfect realization of said joint unitary operation *U_{n,nc}* on said joint system is by an application of a sequence of local unitary operations, wherein each local unitary operation is acting on at most two subsystems of said joint system.

10. Method according to claim 9, wherein said connectivity and said operativity of said quantum computing device (1) is such that for each subsystem the potentially imperfect realization of said joint unitary operation *U_{n,nc}* on said joint system is by an application of a sequence of local unitary operations, wherein each local unitary operation is acting on at most two subsystems of said joint system.

11. Method according to anyone of the preceding claims, wherein said plurality of subsystems is partitioned in a system subset and an ancillary subset which is a complement of said system subset such that said ancillary subset comprises the at least one connected subsystem *Q_{nsc}* of at least one starting subsystem *Qₙₛ* in said system subset, wherein for each starting subsystem *Qₙₛ* the previously determined quantum state of said at least one connected subsystem *Q_{nsc}* is a predetermined quantum state described by the density operator *ρ_{nsc}* and wherein said connectivity and said operativity of said quantum computing device (1) further allows to prepare said system quantum state by preparing the plurality of subsystems in said system subset in a desired solution state and by preparing for each starting subsystem *Qₙₛ* the at least one connected subsystem *Q_{nsc}* of said ancillary subset in the predetermined quantum state described by the density operator *ρ_{nsc}*, said method further comprising:
preparing said system quantum state by operation of said quantum computing device (1);
and wherein the at least one initially selected subsystem *Q*_{*n*0} comprises said at least one starting subsystem *Qₙₛ*, and wherein for each of said starting subsystems *Qₙₛ* the realization of the nₛ-th local Positive Operator Valued Measure in the initial measurement step is by implementing, by operation of said quantum computing device (1), said potentially imperfect realization of said joint unitary operation *U*_{*ns*,*nsc*} followed by said joint quantum measurement described by said plurality of measurement operators ${M}_{{m}_{{n}_{s} , {n}_{sc}}}^{\left({n}_{s}, {n}_{sc}\right)}$ on said joint system of said starting subsystem *Qₙₛ* and said at least one connected subsystem *Q_{nsc}* which is in the previously determined quantum state described by the density operator *ρ_{nsc}*, to thereby obtain a measurement outcome *m_{ns,nsc}*.

12. Method according to claim 11, wherein said connectivity and said operativity of said quantum computing device allows to prepare said system quantum state by preparing the plurality of subsystems in said system subset in the desired solution state by quantum gate application.

13. Method according to claim 11 or 12, wherein said iteration is terminated when for each subsystem Qₙ in said system subset the local Positive Operator Valued Measure has been realized.

14. Method according to anyone of the preceding claims, wherein at least one iterative measurement step comprises selecting the iteratively selected subsystems Qₙ on the basis of the measurement outcome of a preceding initial or iterative measurement step.

15. Method according to anyone of the preceding claims, wherein for at least one iteratively selected subsystem Qₙ the previously determined quantum state of said at least one connected subsystem *Q_{nc}* is a predetermined quantum state described by the predetermined density operator *ρ_{nc}*, and said method further comprises preparing the at least one connected subsystem *Q_{nc}* in said predetermined quantum state before the realization of the n-th local Positive Operator Valued Measure on said at least one iteratively selected subsystem Qₙ in the iterative measurement step.

16. Method according to claim 15, wherein said predetermined quantum state is a pure quantum state.

17. Method according to anyone of the preceding claims, wherein said quantum computing device (1) is further operative to implement for at least one of said subsystems Qₙ a plurality of P potentially imperfect realizations of joint unitary operations ${U}_{n , {n}_{c}}^{\left(p\right)} , p = 1 , … . , P$, and a plurality of R joint quantum measurements on the joint system of said subsystem Qₙ and the at least one connected subsystem *Q_{nc}*, said realization of said r-th joint quantum measurement, r=1, ..., R, being described by a plurality of measurement operators ${M}_{{m}_{n , {n}_{c}}}^{\left(r, n, {n}_{c}\right)}$, each measurement operator ${M}_{{m}_{n , {n}_{c}}}^{\left(r,nn{,}_{c}\right)}$ being associated with a measurement outcome ${m}_{n , {n}_{c}}^{\left(r\right)}$, and wherein said realization of said n-th local Positive Operator Valued Measure on said subsystem Qₙ comprises selecting one of said joint unitary operations ${U}_{n , {n}_{c}}^{\left(p\right)}$ of said plurality and selecting one of said joint quantum measurements of said plurality described by the measurement operators ${M}_{{m}_{n , {n}_{c}}}^{\left(r, n, {n}_{c}\right)}$ and implementing, by operation of said quantum computing device (1), said potentially imperfect realization of said selected joint unitary operation ${U}_{n , {n}_{c}}^{\left(p\right)}$ followed by said selected joint quantum measurement described by said plurality of measurement operators ${M}_{{m}_{n , {n}_{c}}}^{\left(r, n, {n}_{c}\right)}$ on said joint system of said iteratively selected subsystem Qₙ and said at least one connected subsystem *Q_{nc}*.

18. Method according to claim 17, wherein said selection is on the basis of the measurement outcome of a preceding initial or iterative measurement step and/or said selection is a random selection.

19. Method according to anyone of the preceding claims, wherein for at least one iteratively selected subsystem Qₙ the *n_{c}*-th local Positive Operator Valued Measure has been realized on the at least one connected subsystem *Q_{nc}* with measurement outcome *m_{nc}* in the initial measurement step or in one of the previous measurement steps, the previously determined quantum state of the at least one connected subsystem *Q_{nc}* is the state of said at least one connected subsystem *Q_{nc}* after the realization of the n_{c}-th local Positive Operator Valued Measure on said connected subsystem *Q_{nc}*, and said method further comprises inferring the reduced density operator *ρ_{nc}* of said at least one connected subsystem *Q_{nc}* on the basis of said measurement outcome *m_{nc}*.

20. Method according to anyone of the preceding claims, wherein for at least one iteratively selected second subsystem *Q*_{*n*2} of a second iterative measurement step the at least one connected subsystem *Q*_{*n*1,2*c*} is also the at least one connected subsystem *Q*_{*n*1,2*c*} of a previously selected first subsystem *Q*_{*n*1} of a previous iterative measurement step, the previously determined quantum state of said at least one connected subsystem *Q*_{*n*1,2*c*} in said second iterative measurement step being the state of said at least one connected subsystem *Q*_{*n*1,2*c*} after the realization of said n₁-th local Positive Operator Valued Measure on said first subsystem *Q*_{*n*1} in said previous iterative measurement step, and said method further comprises inferring the reduced density operator of the at least one connected subsystem *Q*_{*n*1,2*c*} in the second iterative measurement step on the basis of said measurement outcome *m*_{*n*1,n1,2*c*} which is obtained when realizing the n₁-th local Positive Operator Valued Measure on said first subsystem *Q*_{*n*1} in said previous measurement step.

21. Method according to anyone of the preceding claims, wherein for at least one subsystem Qₙ the plurality of measurement operators ${M}_{{m}_{n , {n}_{c}}}^{\left(n, {n}_{c}\right)}$ describe a potentially imperfect realization of a projective measurement.

22. Method according to claim 21, wherein for at least one subsystem Qₙ the plurality of measurement operators ${M}_{{m}_{n , {n}_{c}}}^{\left(n, {n}_{c}\right)}$ describe a realization of a projective measurement.

23. Method according to anyone of the preceding claims, wherein for at least one subsystem Qₙ the joint quantum measurement is a local quantum measurement with respect to the subsystem Qₙ and the at least one connected subsystem *Q_{nc}* of said joint system so that each measurement operator ${M}_{{m}_{n , {n}_{c}}}^{\left(n, {n}_{c}\right)}$ of said plurality is a tensor product ${M}_{{m}_{n , {n}_{c}}}^{\left(n, {n}_{c}\right)} = {M}_{{m}_{n}}^{\left(n\right)} ⊗ {M}_{{m}_{{n}_{c}}}^{\left({n}_{c}\right)}$ , wherein ${M}_{{m}_{n}}^{\left(n\right)}$ is a measurement operator of a first quantum measurement defined on the subsystem Qₙ with associated measurement outcome mₙ and ${M}_{{m}_{{n}_{c}}}^{\left({n}_{c}\right)}$ is a measurement operator of a second quantum measurement defined on the at least one connected subsystem *Q_{nc}* with associated measurement outcome *m_{nc}*.

24. Method according to claim 23, wherein the quantum measurement is local with respect to each subsystem of said joint system, i.e., the measurement operators ${M}_{{m}_{n , {n}_{c}}}^{\left(n, {n}_{c}\right)}$ are tensor products of measurement operators of quantum measurements on each subsystem of said joint system.

25. Method according to anyone of the preceding claims, wherein for at least one subsystem Qₙ said realization of said unitary operation *U_{n,nc}* is a perfect realization of said unitary operation *U_{nnc}.*

26. Method according to anyone of the preceding claims, wherein said method further comprises for at least one initially or iteratively selected subsystem Qₙ:
a. providing the following input to a classical computer:
the measurement outcome *m*_{*n*,*n*} and a representation of the associated measurement operator ${M}_{{m}_{n , {n}_{c}}}^{\left(n, {n}_{c}\right)}$;
a representation of a quantum channel *E_{n,nc}* describing the potentially imperfect realization of said joint unitary operation *U_{n,nc}*;
a representation of the reduced density operator *ρ_{nc}* of said at least one connected subsystem *Q_{nc}*;
a representation of basis operators ${B}_{{a}_{n}}^{\left(n\right)}$ of a local orthonormal basis of an operator space associated with a Hilbert space Hₙ of said subsystem Qₙ;
b. calculating, by the classical computer, a representation of a local effect ${Π}_{{m}_{n , {n}_{c}}}^{\left(n, {n}_{c}\right)} = {Σ}_{{a}_{n}} {π}_{{a}_{n}}^{\left(n, {n}_{c}, {m}_{n , {n}_{c}}\right)} {B}_{{a}_{n}}^{\left(n\right)}$ associated with the local Positive Operator Valued Measure realized on said selected subsystem Qₙ, wherein the coefficients ${π}_{{a}_{n}}^{\left(n, {n}_{c}, {m}_{n , {n}_{c}}\right)} = tr \left[{M}_{{m}_{n , {n}_{c}}}^{\left(n, {n}_{c}\right)}{E}_{n , {n}_{c}}\left({B}_{{a}_{n}}^{\left(n\right)}⊗{ρ}_{{n}_{c}}\right){M}_{{m}_{n , {n}_{c}}}^{\left(n, {n}_{c}\right) †}\right]$ are given by a trace over a product of an image of a tensor product of the basis operator ${B}_{{a}_{n}}^{\left(n\right)}$ and the reduced density operator *ρ_{nc}* under the quantum channel *E_{n,nc}*, and the measurement operator ${M}_{{m}_{n , {n}_{c}}}^{\left(n, {n}_{c}\right)}$ and its hermitian conjugate.

27. Quantum computing device (1), said quantum computing device (1) comprising a composite system (2) comprising a plurality of quantum mechanical subsystems Qₙ, n=1, ..., N, N≥2, and said quantum computing device (1) having a connectivity and operativity that allows to implement for each of said subsystems Qₙ a potentially imperfect realization of a joint unitary operation *U_{n,nc}* and a joint quantum measurement on a joint system of said subsystem Qₙ and at least one connected subsystem *Q_{nc}* of said plurality of subsystems, said realization of said joint quantum measurement being described by a plurality of measurement operators ${M}_{{m}_{n , {n}_{c}}}^{\left(n, {n}_{c}\right)}$, each measurement operator ${M}_{{m}_{n , {n}_{c}}}^{\left(n, {n}_{c}\right)}$ being associated with a measurement outcome *m_{n,nc}*,
said quantum computing device (1) further comprising means for realizing an n₀-th local Positive Operator Valued Measure on at least one initially selected subsystem *Q*_{*n*0} to thereby obtain a measurement outcome *m*_{*n*0}, and a controller (5),
wherein said quantum computing device (1) is operative, by control of the controller (5), to implement an initial measurement step which comprises for at least one initially selected subsystem *Q*_{*n*0} the realization of the n₀-th local Positive Operator Valued Measure on said initially selected subsystem *Q*_{*n*0} to thereby obtain the measurement outcome *m*_{*n*0} and to implement an iterative measurement step which comprises for at least one iteratively selected subsystem Qₙ a realization of an n-th local Positive Operator Valued Measure on said iteratively selected subsystem Qₙ by implementing, by operation of said quantum computing device (1), said potentially imperfect realization of said joint unitary operation *U_{n,nc}* followed by said joint quantum measurement described by said plurality of measurement operators ${M}_{{m}_{n , {n}_{c}}}^{\left(n, {n}_{c}\right)}$ on said joint system of said iteratively selected subsystem Qₙ and said at least one connected subsystem *Q_{nc}*, wherein said at least one connected subsystem *Q_{nc}* is in a previously determined quantum state described by a density operator *ρ_{nc}*, to thereby obtain a measurement outcome *m_{n,nc}*,
wherein for at least one iteratively selected subsystem Qₙ at least one of said connected subsystems *Q_{nc}* is one of said at least one initially selected subsystems *Q*_{*n*0}.

28. Quantum computing device (1) according to claim 27, wherein said quantum mechanical subsystems are qubits.

29. Quantum computing device (1) according to claims 27 or 28, wherein for at least one iteratively selected subsystem Qₙ each of said connected subsystems is one of said at least one initially selected subsystems *Q*_{*n*0}.

## Patentansprüche

1. Verfahren zur Implementierung einer Quantenmessung an einem Systemquantenzustand eines zusammengesetzten Systems (2) einer Quantenrechenvorrichtung (1), wobei das zusammengesetzte System (2) eine Vielzahl von quantenmechanischen Teilsystemen Qₙ, n = 1, ..., N, N ≥ 2, umfasst, und die Quantenrechenvorrichtung (1) eine Konnektivität und Funktionsfähigkeit aufweist, die es ermöglicht, für jedes der Teilsysteme Qₙ eine potenziell unvollkommene Realisierung einer gemeinsamen unitären Operation *U_{n,nc}* und eine gemeinsame Quantenmessung an einem gemeinsamen System des Teilsystems Qₙ und mindestens eines verbundenen Teilsystems *Q_{nc}* der Vielzahl von Teilsystemen zu implementieren, wobei die Realisierung der gemeinsamen Quantenmessung durch eine Vielzahl von Messoperatoren ${M}_{{m}_{n , {n}_{c}}}^{\left(n, {n}_{c}\right)}$ beschrieben wird, wobei jedem Messoperator ${M}_{{m}_{n , {n}_{c}}}^{\left(n, {n}_{c}\right)}$ ein Messergebnis *m_{n,nc}* zugeordnet ist,
wobei das Verfahren Folgendes umfasst:
einen anfänglichen Messschritt, der für mindestens ein anfänglich ausgewähltes Teilsystem *Q*_{*n*0} eine Realisierung eines n₀-ten lokalen POVM (Positive Operator Valued Measure) an dem anfänglich ausgewählten Teilsystem *Q*_{*n*0} umfasst, um dadurch ein Messergebnis *m*_{*n*0} zu erhalten;
einen iterativen Messschritt, der für mindestens ein iterativ ausgewähltes Teilsystem Qₙ eine Realisierung eines n-ten lokalen POVM (Positive Operator Valued Measure) an dem iterativ ausgewählten Teilsystem Qₙ umfasst, indem durch den Betrieb der Quantenrechenvorrichtung (1) die potenziell unvollkommene Realisierung der gemeinsamen unitären Operation *U_{n,n}* implementiert wird, gefolgt von der durch die Vielzahl von Messoperatoren ${M}_{{m}_{n , {n}_{c}}}^{\left(n, {n}_{c}\right)}$ beschriebenen gemeinsamen Quantenmessung an dem gemeinsamen System des iterativ ausgewählten Teilsystems Qₙ und des mindestens einen verbundenen Teilsystems *Q_{nc}*, wobei sich das mindestens eine verbundene Teilsystem *Q_{nc}* in einem zuvor bestimmten Quantenzustand befindet, der durch einen Dichteoperator *ρ_{nc}* beschrieben wird, um dadurch ein Messergebnis *m_{n,nc}* zu erhalten,
wobei für mindestens ein iterativ ausgewähltes Teilsystem Qₙ mindestens eines der verbundenen Teilsysteme *Q_{nc}* eines der mindestens einen anfänglich ausgewählten Teilsysteme *Q*_{*n*0} ist.

2. Verfahren nach Anspruch 1, wobei es sich bei den quantenmechanischen Teilsystemen Qₙ um Qubits handelt.

3. Verfahren nach Anspruch 1 oder 2, wobei für mindestens ein iterativ ausgewähltes Teilsystem Qₙ jedes der verbundenen Teilsysteme *Q_{nc}* eines der mindestens einen anfänglich ausgewählten Teilsysteme *Q*_{*n*0} ist.

4. Verfahren nach einem der vorhergehenden Ansprüche, wobei der iterative Messschritt wiederholt wird, und wobei die Konnektivität der Quantenrechenvorrichtung (1) und die Iteration so beschaffen sind, dass für mindestens eines der iterativ ausgewählten Teilsysteme Qₙ das n_{c}-te lokale POVM (Positive Operator Valued Measure) zuvor an mindestens einem der verbundenen Teilsysteme *Q_{nc}* des mindestens einen iterativ ausgewählten Teilsystems Qₙ in einem vorherigen initialen oder iterativen Messschritt realisiert wurde.

5. Verfahren nach Anspruch 4, wobei der iterative Messschritt wiederholt wird, und wobei die Konnektivität der Quantenrechenvorrichtung (1) und die Iteration so beschaffen sind, dass für mindestens eines der iterativ ausgewählten Teilsysteme Qₙ das n_{c}-te lokale POVM (Positive Operator Valued Measure) zuvor an jedem der verbundenen Teilsysteme *Q_{nc}* des mindestens einen iterativ ausgewählten Teilsystems Qₙ in einem vorherigen initialen oder iterativen Messschritt realisiert wurde.

6. Verfahren nach Anspruch 4 oder 5, wobei der iterative Messschritt wiederholt wird, und wobei die Konnektivität der Quantenrechenvorrichtung (1) und die Iteration so beschaffen sind, dass für jedes iterativ ausgewählte Teilsystem Qₙ das n_{c}-te lokale POVM (Positive Operator Valued Measure) zuvor an mindestens einem der verbundenen Teilsysteme *Q_{nc}* des mindestens einen iterativ ausgewählten Teilsystems Qₙ in einem vorherigen initialen oder iterativen Messschritt realisiert wurde.

7. Verfahren nach Anspruch 6, wobei der iterative Messschritt wiederholt wird, und wobei die Konnektivität der Quantenrechenvorrichtung (1) und die Iteration so beschaffen sind, dass für jedes iterativ ausgewählte Teilsystem Qₙ das n_{c}-te lokale POVM (Positive Operator Valued Measure) zuvor an jedem der verbundenen Teilsysteme *Q_{nc}* des mindestens einen iterativ ausgewählten Teilsystems Qₙ in einem vorherigen initialen oder iterativen Messschritt realisiert wurde.

8. Verfahren nach einem der vorhergehenden Ansprüche, wobei die Iteration beendet wird, wenn für jedes Teilsystem Qₙ das jeweilige n-te lokale POVM (Positive Operator Valued Measure) realisiert wurde.

9. Verfahren nach einem der vorhergehenden Ansprüche, wobei die Konnektivität und die Funktionsfähigkeit der Quantenrechenvorrichtung (1) so beschaffen sind, dass für mindestens ein Teilsystem Qₙ, die potenziell unvollkommene Realisierung der gemeinsamen unitären Operation *U_{n,nc}* an dem gemeinsamen System durch Anwendung einer Folge lokaler unitärer Operationen erfolgt, wobei jede lokale unitäre Operation auf höchstens zwei Teilsysteme des gemeinsamen Systems wirkt.

10. Verfahren nach Anspruch 9, wobei die Konnektivität und die Funktionsfähigkeit der Quantenrechenvorrichtung (1) so beschaffen sind, dass für jedes Teilsystem die potenziell unvollkommene Realisierung der gemeinsamen unitären Operation *U_{n,nc}* an dem gemeinsamen System durch Anwendung einer Folge lokaler unitärer Operationen erfolgt, wobei jede lokale unitäre Operation auf höchstens zwei Teilsysteme des gemeinsamen Systems wirkt.

11. Verfahren nach einem der vorhergehenden Ansprüche, wobei die Vielzahl von Teilsystemen in eine Systemteilmenge und eine Hilfsteilmenge, die das Komplement der Systemteilmenge ist, unterteilt ist, sodass die Hilfsteilmenge das mindestens eine verbundene Teilsystem *Q_{nsc}* von mindestens einem Startteilsystem *Qₙₛ* der Systemteilmenge umfasst, wobei für jedes Startteilsystem *Qₙₛ* der zuvor bestimmte Quantenzustand des mindestens einen verbundenen Teilsystems *Q_{nc}* ein vorbestimmter Quantenzustand ist, der durch den Dichteoperator ρ*_{nsc}* beschrieben wird, und wobei die Konnektivität und die Funktionsfähigkeit der Quantenrechenvorrichtung (1) es ferner ermöglichen, den Systemquantenzustand durch Vorbereiten der Vielzahl von Teilsystemen der Systemteilmenge in einen gewünschten Lösungszustand und durch Vorbereiten - für jedes Startteilsystem *Qₙₛ* - des mindestens einen verbundenen Teilsystems *Q_{nsc}* der Hilfsteilmenge in den vorbestimmten Quantenzustand, der durch den Dichteoperator ρ*_{nsc}* beschrieben wird, vorzubereiten, wobei das Verfahren ferner Folgendes umfasst:
Vorbereiten des Systemquantenzustands durch Betrieb der Quantenrechenvorrichtung (1);
und wobei das mindestens eine anfänglich ausgewählte Teilsystem *Q*_{*n*0} das mindestens eine Startteilsystem *Qₙ* umfasst, und wobei für jedes der Startteilsysteme *Qₙₛ* die Realisierung des nₛ-ten lokalen POVM (Positive Operator Valued Measure) im anfänglichen Messschritt so erfolgt, dass mittels des Betriebs der Quantenrechenvorrichtung (1) die potenziell unvollkommene Realisierung der gemeinsamen unitären Operation *U*_{*n*,*nsc*} implementiert wird, gefolgt von der durch die Vielzahl von Messoperatoren ${M}_{{m}_{{n}_{s} , {n}_{sc}}}^{\left({n}_{s}, {n}_{sc}\right)}$ beschriebenen gemeinsamen Quantenmessung an dem gemeinsamen System des Startteilsystems *Qₙₛ* und des mindestens einen verbundenen Teilsystems *Q_{nsc}*, das sich in dem zuvor bestimmten Quantenzustand befindet, der durch den Dichteoperator ρ*_{nsc}* beschrieben wird, um dadurch ein Messergebnis *mₙₛ*,*_{nc}* zu erhalten.

12. Verfahren nach Anspruch 11, wobei die Konnektivität und die Funktionsfähigkeit der Quantenrechenvorrichtung es ermöglichen, den Systemquantenzustand vorzubereiten, indem die Vielzahl von Teilsystemen der Systemteilmenge durch Quantengatteranwendung in dem gewünschten Lösungszustand vorbereitet wird.

13. Verfahren nach Anspruch 11 oder 12, wobei die Iteration beendet wird, wenn für jedes Teilsystem Qₙ der Systemteilmenge das lokale POVM (Positive Operator Valued Measure) realisiert wurde.

14. Verfahren nach einem der vorhergehenden Ansprüche, wobei mindestens ein iterativer Messschritt ein Auswählen der iterativ ausgewählten Teilsysteme Qₙ auf der Grundlage des Messergebnisses eines vorhergehenden anfänglichen oder iterativen Messschritts umfasst.

15. Verfahren nach einem der vorhergehenden Ansprüche, wobei für mindestens ein iterativ ausgewähltes Teilsystem Qₙ der zuvor bestimmte Quantenzustand des mindestens einen verbundenen Teilsystems *Q_{nc}* ein vorbestimmter Quantenzustand ist, der durch den vorbestimmten Dichteoperator *ρ_{nc}* beschrieben wird, und das Verfahren ferner Folgendes umfasst: Vorbereiten des mindestens einen verbunden Teilsystems *Q_{nc}* in den vorbestimmten Quantenzustand vor der Realisierung des n-ten lokalen POVM (Positive Operator Valued Measure) an dem mindestens einen iterativ ausgewählten Teilsystem Qₙ im iterativen Messschritt.

16. Verfahren nach Anspruch 15, wobei es sich bei dem vorbestimmten Quantenzustand um einen reinen Quantenzustand handelt.

17. Verfahren nach einem der vorhergehenden Ansprüche, wobei die Quantenrechenvorrichtung (1) ferner zu Folgendem betriebsfähig ist: für mindestens eines der Teilsysteme Qₙ Implementieren einer Vielzahl von P potenziell unvollkommenen Realisierungen gemeinsamer unitärer Operationen ${U}_{n , {n}_{c}}^{\left(p\right)} , p = 1 , … , P$, und einer Vielzahl von R gemeinsamen Quantenmessungen an dem gemeinsamen System des Teilsystems Qₙ und des mindestens einen verbundenen Teilsystems *Q_{nc}*, wobei die Realisierung der r-ten gemeinsamen Quantenmessung, r = 1, ..., R, durch eine Vielzahl von Messoperatoren ${M}_{{m}_{n , {n}_{c}}}^{\left(r, n, {n}_{c}\right)}$ beschrieben wird, wobei jedem Messoperator ${M}_{{m}_{n , {n}_{c}}}^{\left(r, n, {n}_{c}\right)}$ ein Messergebnis ${m}_{n , {n}_{c}}^{\left(r\right)}$ zugeordnet ist, und wobei die Realisierung des n-ten lokalen POVM (Positive Operator Valued Measure) am Teilsystem Qₙ Folgendes umfasst: Auswählen einer der gemeinsamen unitären Operationen ${U}_{n , {n}_{c}}^{\left(p\right)}$ unter der Vielzahl und Auswählen einer der gemeinsamen Quantenmessungen unter der Vielzahl, die durch die Messoperatoren ${M}_{{m}_{n , {n}_{c}}}^{\left(r, n, {n}_{c}\right)}$ beschrieben wird, und Implementieren, durch den Betrieb der Quantenrechenvorrichtung (1), der potenziell unvollkommenen Realisierung der ausgewählten gemeinsamen unitären Operation ${U}_{n , {n}_{c}}^{\left(p\right)}$ gefolgt von der ausgewählten gemeinsamen Quantenmessung, die durch die Vielzahl von Messoperatoren ${M}_{{m}_{n , {n}_{c}}}^{\left(r, n, {n}_{c}\right)}$ beschrieben wird, an dem gemeinsamen System des iterativ ausgewählten Teilsystems Qₙ und des mindestens einen verbundenen Teilsystems *Q_{nc}*.

18. Verfahren nach Anspruch 17, wobei das Auswählen auf der Grundlage des Messergebnisses eines vorhergehenden anfänglichen oder iterativen Messschritts erfolgt und/oder es sich bei dem Auswählen um ein zufälliges Auswählen handelt.

19. Verfahren nach einem der vorhergehenden Ansprüche, wobei für mindestens ein iterativ ausgewähltes Teilsystem Qₙ das n_{c}-te lokale POVM (Positive Operator Valued Measure) an dem mindestens einen verbundenen Teilsystem *Q_{nc}* mit Messergebnis *m_{nc}* im anfänglichen Messschritt oder in einem der vorherigen Messschritte realisiert wurde, der zuvor bestimmte Quantenzustand des mindestens einen verbundenen Teilsystems *Q_{nc}* der Zustand dieses mindestens einen verbundenen Teilsystems *Q_{nc}* nach der Realisierung des n_{c}-ten lokalen POVM (Positive Operator Valued Measure) an diesem verbundenen Teilsystem *Qₙ* ist, und das Verfahren ferner Folgendes umfasst: Ableiten des reduzierten Dichteoperators *ρ_{nc}* des mindestens einen verbundenen Teilsystems *Q_{nc}* auf der Grundlage des Messergebnisses *m_{nc}*.

20. Verfahren nach einem der vorhergehenden Ansprüche, wobei für mindestens ein iterativ ausgewähltes zweites Teilsystem *Q*_{*n*2} eines zweiten iterativen Messschritts das mindestens eine verbundene Teilsystem *Q*_{*n*1,2*c*} auch das mindestens eine verbundene Teilsystem *Q*_{*n*1,2*c*} eines zuvor ausgewählten ersten Teilsystems *Q*_{*n*1} eines vorherigen iterativen Messschritts ist, wobei der zuvor bestimmte Quantenzustand des mindestens einen verbundenen Teilsystems *Q*_{*n*1,2*c*} im zweiten iterativen Messschritt der Zustand des mindestens einen verbundenen Teilsystems *Q*_{*n*1,2*c*} nach der Realisierung des n₁-ten lokalen POVM (Positive Operator Valued Measure) an dem ersten Teilsystem *Q*_{*n*1} im vorherigen iterativen Messschritt ist, und das Verfahren ferner Folgendes umfasst: Ableiten des reduzierten Dichteoperators des mindestens einen verbundenen Teilsystems *Q*_{*n*1,2*c*} in dem zweiten iterativen Messschritt auf der Grundlage des Messergebnisses *m*_{*n*1,*n*1,2*c*}, das erhalten wurde, wenn das n₁-te lokale POVM (Positive Operator Valued Measure) an dem ersten Teilsystem *Q*_{*n*1} in dem vorherigen Messschritt realisiert wurde.

21. Verfahren nach einem der vorhergehenden Ansprüche, wobei für mindestens ein Teilsystem Qₙ die Vielzahl von Messoperatoren ${M}_{{m}_{n , {n}_{c}}}^{\left(n, {n}_{c}\right)}$ eine potenziell unvollkommene Realisierung einer projektiven Messung beschreiben.

22. Verfahren nach Anspruch 21, wobei für mindestens ein Teilsystem Qₙ die Vielzahl von Messoperatoren ${M}_{{m}_{n , {n}_{c}}}^{\left(n, {n}_{c}\right)}$ eine Realisierung einer projektiven Messung beschreiben.

23. Verfahren nach einem der vorhergehenden Ansprüche, wobei für mindestens ein Teilsystem Qₙ die gemeinsame Quantenmessung eine lokale Quantenmessung in Bezug auf das Teilsystem Qₙ und das mindestens eine verbundene Teilsystem Q_{nc} des gemeinsamen Systems ist, sodass jeder Messoperator ${M}_{{m}_{n , {n}_{c}}}^{\left(n, {n}_{c}\right)}$ der Vielzahl ein Tensorprodukt ${M}_{{m}_{n , {n}_{c}}}^{\left(n, {n}_{c}\right)} = {M}_{{m}_{n}}^{\left(n\right)} ⊗ {M}_{{m}_{{n}_{c}}}^{\left({n}_{c}\right)}$ ist, wobei ${M}_{{m}_{n}}^{\left(n\right)}$ ein Messoperator einer ersten Quantenmessung ist, die an dem Teilsystem Qₙ mit zugeordnetem Messergebnis mₙ definiert ist, und ${M}_{{m}_{{n}_{c}}}^{\left({n}_{c}\right)}$ ein Messoperator einer zweiten Quantenmessung ist, die an dem mindestens einen verbundenen Teilsystem Qₙ mit zugeordnetem Messergebnis m_{nc} definiert ist.

24. Verfahren nach Anspruch 23, wobei die Quantenmessung lokal in Bezug auf jedes Teilsystem des gemeinsamen Systems ist, d.h. die Messoperatoren ${M}_{{m}_{n , {n}_{c}}}^{\left(n, {n}_{c}\right)}$ sind Tensorprodukte von Messoperatoren von Quantenmessungen an jedem Teilsystem des gemeinsamen Systems.

25. Verfahren nach einem der vorhergehenden Ansprüche, wobei für mindestens ein Teilsystem Qₙ die Realisierung der unitären Operation *U*_{*n*,*nc*} eine perfekte Realisierung der unitären Operation *U*_{*n*,*nc*} ist.

26. Verfahren nach einem der vorhergehenden Ansprüche, wobei das Verfahren ferner für mindestens ein anfänglich oder iterativ ausgewähltes Teilsystem Qₙ Folgendes umfasst:
a. Bereitstellen der folgenden Eingabe an einen klassischen Rechner:
das Messergebnis *m_{n,nc}* und eine Darstellung des zugeordneten Messoperators ${M}_{{m}_{n , {n}_{c}}}^{\left(n, {n}_{c}\right)}$;
eine Darstellung eines Quantenkanals *E*_{*n*,*n*}, der die potenziell unvollkommene Realisierung der gemeinsamen unitären Operation *U*_{*n*,*nc*} beschreibt;
eine Darstellung des reduzierten Dichteoperators *ρ_{nc}* des mindestens einen verbundenen Teilsystems *Qₙ*;
einer Darstellung von Basisoperatoren ${B}_{{a}_{n}}^{\left(n\right)}$ einer lokalen orthonormalen Basis eines Operatorraums, der einem Hilbertraum Hₙ des Teilsystems Qₙ zugeordnet ist;
b. Berechnen, durch den klassischen Rechner, einer Darstellung eines lokalen Effekts ${\prod }_{{m}_{n , {n}_{c}}}^{\left(n, {n}_{c}\right)} = {\sum }_{{a}_{n}} {π}_{{a}_{n}}^{\left(n, {n}_{c}, {m}_{n}, {n}_{c}\right)} {B}_{{a}_{n}}^{\left(n\right)}$ , der dem an dem ausgewählten Teilsystem Qₙ realisierten lokalen POVM (Positive Operator Valued Measure) zugeordnet ist, wobei die Koeffizienten ${π}_{{a}_{n}}^{\left(n, {n}_{c}, {m}_{n , {n}_{c}}\right)} = tr \left[{M}_{{m}_{n , {n}_{c}}}^{\left(n, {n}_{c}\right)}{E}_{n , {n}_{c}}\left({B}_{{a}_{n}}^{\left(n\right)}⊗{ρ}_{{n}_{c}}\right){M}_{{m}_{n , {n}_{c}}}^{\left(n, {n}_{c}\right) †}\right]$ durch eine Spur über ein Produkt eines Bildes eines Tensorprodukts des Basisoperators ${B}_{{a}_{n}}^{\left(n\right)}$ und des reduzierten Dichteoperators *ρ_{nc}* unter dem Quantenkanal *E*_{*n*,*nc*}, und des Messoperators ${M}_{{m}_{n , {n}_{c}}}^{\left(n, {n}_{c}\right)}$ und seines hermitesch Konjugierten gegeben sind.

27. Quantenrechenvorrichtung (1), wobei die Quantenrechenvorrichtung (1) ein zusammengesetztes System (2) mit einer Vielzahl von quantenmechanischen Teilsystemen Qₙ, n = 1, ..., N, N ≥ 2 umfasst und die Quantenrechenvorrichtung (1) eine Konnektivität und Funktionsfähigkeit aufweist, die es ermöglicht, für jedes der Teilsysteme Qₙ eine potenziell unvollkommene Realisierung einer gemeinsamen unitären Operation *U*_{*n*,*nc*} und eine gemeinsame Ouantenmessung an einem gemeinsamen System des Teilsystems Qₙ und mindestens eines verbundenen Teilsystems *Qₙ* der Vielzahl von Teilsystemen zu implementieren, wobei die Realisierung der gemeinsamen Quantenmessung durch eine Vielzahl von Messoperatoren ${M}_{{m}_{n , {n}_{c}}}^{\left(n, {n}_{c}\right)}$ beschrieben wird, wobei jedem Messoperator ${M}_{{m}_{n , {n}_{c}}}^{\left(n, {n}_{c}\right)}$ ein Messergebnis *m*_{*n*,*nc*} zugeordnet ist,
wobei die Quantenrechenvorrichtung (1) ferner Mittel zur Realisierung einer n₀-ten lokalen POVM (Positive Operator Valued Measure) an mindestens einem anfänglich ausgewähltem Teilsystem *Q*_{*n*0}, um dadurch ein Messergebnis *m*_{*n*0} zu erhalten, und eine Steuervorrichtung (5) umfasst,
wobei die Quantenrechenvorrichtung (1) durch Steuerung durch die Steuervorrichtung (5) zu Folgendem betriebsfähig ist: Implementieren eines anfänglichen Messschritts, der für mindestens ein anfänglich ausgewähltes Teilsystem *Q*_{*n*0} die Realisierung des n₀-ten lokalen POVM (Positive Operator Valued Measure) an dem anfänglich ausgewählten Teilsystem *Q*_{*n*0} umfasst, um dadurch das Messergebnis *m*_{*n*0} zu erhalten, und Implementieren eines iterativen Messschritts, der für mindestens ein iterativ ausgewähltes Teilsystem Qₙ eine Realisierung eines n-ten lokalen POVM (Positive Operator Valued Measure) an dem iterativ ausgewählten Teilsystem Qₙ umfasst, indem durch den Betrieb der Quantenrechenvorrichtung (1) die potenziell unvollkommene Realisierung der gemeinsamen unitären Operation *U*_{*n*,*nc*} implementiert wird, gefolgt von der durch die Vielzahl von Messoperatoren ${M}_{{m}_{n , {n}_{c}}}^{\left(n, {n}_{c}\right)}$ beschriebenen gemeinsamen Quantenmessung an dem gemeinsamen System des iterativ ausgewählten Teilsystems Qₙ und des mindestens einen verbundenen Teilsystems *Q_{nc}*, wobei sich das mindestens eine verbundene Teilsystem *Q_{nc}* in einem zuvor bestimmten Quantenzustand befindet, der durch einen Dichteoperator *ρ_{nc}* beschrieben wird, um dadurch ein Messergebnis *m_{n,nc}* zu erhalten,
wobei für mindestens ein iterativ ausgewähltes Teilsystem Qₙ mindestens eines der verbundenen Teilsysteme *Q_{nc}* eines der mindestens einen anfänglich ausgewählten Teilsysteme *Q*_{*n*0} ist.

28. Quantenrechenvorrichtung (1) nach Anspruch 27, wobei es sich bei den quantenmechanischen Teilsystemen um Qubits handelt.

29. Quantenrechenvorrichtung (1) nach Anspruch 27 oder 28, wobei für mindestens ein iterativ ausgewähltes Teilsystem Qₙ, jedes der verbundenen Teilsysteme eines der mindestens einen anfänglich ausgewählten Teilsysteme *Q*_{*n*0} ist.

## Revendications

1. Procédé de mise en œuvre d'une mesure quantique sur l'état quantique d'un système composite (2) d'un dispositif de calcul quantique (1), ledit système composite (2) comprenant une pluralité de sous-systèmes mécaniques quantiques Qₙ, n = 1, ..., N, N ≥ 2, et ledit dispositif de calcul quantique (1) ayant une connectivité et une opérabilité permettant de mettre en œuvre, pour chacun desdits sous-systèmes Qₙ, une réalisation potentiellement imparfaite d'une opération unitaire conjointe *U*_{*n*,*n*} et une mesure quantique conjointe sur un système conjoint dudit sous-système Qₙ et d'au moins un sous-système connecté *Q_{nc}* de ladite pluralité de sous-systèmes, ladite réalisation de ladite mesure quantique conjointe étant décrite par une pluralité d'opérateurs de mesure ${M}_{{m}_{n , {n}_{c}}}^{\left(n, {n}_{c}\right)}$, chaque opérateur de mesure ${M}_{{m}_{n , {n}_{c}}}^{\left(n, {n}_{c}\right)}$ étant associé à un résultat de mesure *m*_{*n*,*nc*},
ledit procédé comprenant :
une étape de mesure initiale qui comprend, pour au moins un sous-système initialement sélectionné *Q*_{*n*0}, la réalisation d'une n₀-ième mesure POVM (Positive Operator Valued Measure) locale sur ledit sous-système initialement sélectionné *Q*_{*n*0} pour ainsi obtenir un résultat de mesure *m*_{*n*0} ;
une étape de mesure itérative qui comprend, pour au moins un sous-système Qₙ sélectionné itérativement, la réalisation d'une n-ième mesure POVM (Positive Operator Valued Measure) locale sur ledit sous-système Qₙ sélectionné itérativement par mise en œuvre, au moyen dudit dispositif de calcul quantique (1), de ladite réalisation potentiellement imparfaite de ladite opération unitaire conjointe *U_{n,n}* puis de ladite mesure quantique conjointe décrite par ladite pluralité d'opérateurs de mesure ${M}_{{m}_{n , {n}_{c}}}^{\left(n, {n}_{c}\right)}$ sur ledit système conjoint dudit sous-système Qₙ sélectionné itérativement et dudit au moins un sous-système connecté *Q_{nc}*, ledit au moins un sous-système connecté *Q_{nc}* se trouvant dans un état quantique précédemment déterminé décrit par un opérateur de densité *ρₙ*, pour ainsi obtenir un résultat de mesure *m_{n,nc}*;
étant entendu que, pour au moins un sous-système Qₙ sélectionné itérativement, au moins un desdits sous-systèmes connectés *Q_{nc}* est un desdits au moins un sous-système initialement sélectionné *Q*_{*n*0}.

2. Procédé selon la revendication 1, dans lequel lesdits sous-systèmes mécaniques quantiques Qₙ sont des qubits.

3. Procédé selon la revendication 1 ou 2, dans lequel, pour au moins un sous-système Qₙ sélectionné itérativement, chacun desdits sous-systèmes connectés *Qₙ*, est un desdits au moins un sous-système initialement sélectionné *Q*_{*n*0}.

4. Procédé selon l'une quelconque des revendications précédentes, dans lequel ladite étape de mesure itérative est itérée, et dans lequel la connectivité du dispositif de calcul quantique (1) et l'itération sont telles que, pour au moins un des sous-systèmes Qₙ sélectionnés itérativement, la n_{c}-ième mesure POVM (Positive Operator Valued Measure) locale a été précédemment réalisée sur au moins un desdits sous-systèmes connectés *Q_{nc}* dudit au moins un sous-système Qₙ sélectionné itérativement lors d'une précédente étape de mesure initiale ou itérative.

5. Procédé selon la revendication 4, dans lequel ladite étape de mesure itérative est itérée, et dans lequel la connectivité du dispositif de calcul quantique (1) et l'itération sont telles que, pour au moins un des sous-systèmes Qₙ sélectionnés itérativement, la n_{c}-ième mesure POVM (Positive Operator Valued Measure) locale a été précédemment réalisée sur chacun desdits sous-systèmes connectés *Q_{nc}* dudit au moins un sous-système Qₙ sélectionné itérativement lors d'une précédente étape de mesure initiale ou itérative.

6. Procédé selon la revendication 4 ou 5, dans lequel ladite étape de mesure itérative est itérée, et dans lequel la connectivité du dispositif de calcul quantique (1) et l'itération sont telles que, pour chaque sous-système Qₙ sélectionné itérativement, la n_{c}-ième mesure POVM (Positive Operator Valued Measure) locale a été précédemment réalisée sur au moins un desdits sous-systèmes connectés *Q_{nc}* dudit au moins un sous-système Qₙ sélectionné itérativement lors d'une précédente étape de mesure initiale ou itérative.

7. Procédé selon la revendication 6, dans lequel ladite étape de mesure itérative est itérée, et dans lequel la connectivité du dispositif de calcul quantique (1) et l'itération sont telles que, pour chaque sous-système Qₙ sélectionné itérativement, la n_{c}-ième mesure POVM (Positive Operator Valued Measure) locale a été précédemment réalisée sur chacun desdits sous-systèmes connectés *Qₙ* dudit au moins un sous-système Qₙ sélectionné itérativement lors d'une précédente étape de mesure initiale ou itérative.

8. Procédé selon l'une quelconque des revendications précédentes, dans lequel ladite itération se termine lorsque, pour chaque sous-système Qₙ, la n-ième mesure POVM (Positive Operator Valued Measure) locale respective a été réalisée.

9. Procédé selon l'une quelconque des revendications précédentes, dans lequel ladite connectivité et ladite opérabilité dudit dispositif de calcul quantique (1) sont telles que, pour au moins un sous-système Qₙ, la réalisation potentiellement imparfaite de ladite opération unitaire conjointe *U_{n,nc}* sur ledit système conjoint s'effectue par application d'une séquence d'opérations unitaires locales, chaque opération unitaire locale agissant sur un maximum de deux sous-systèmes dudit système conjoint.

10. Procédé selon la revendication 9, dans lequel ladite connectivité et ladite opérabilité dudit dispositif de calcul quantique (1) sont telles que, pour chaque sous-système, la réalisation potentiellement imparfaite de ladite opération unitaire conjointe *U_{n,nc}* sur ledit système conjoint s'effectue par application d'une séquence d'opérations unitaires locales, chaque opération unitaire locale agissant sur un maximum de deux sous-systèmes dudit système conjoint.

11. Procédé selon l'une quelconque des revendications précédentes, dans lequel ladite pluralité de sous-systèmes est divisée en un sous-ensemble système et un sous-ensemble auxiliaire qui est un complément dudit sous-ensemble système de telle façon que ledit sous-ensemble auxiliaire comprend l'au moins un sous-système connecté *Q_{nc}* d'au moins un sous-système de départ *Qₙₛ* dudit sous-ensemble système ; dans lequel, pour chaque sous-système de départ *Qₙₛ*, l'état quantique précédemment déterminé dudit au moins un sous-système connecté *Q_{nsc}* est un état quantique prédéterminé décrit par l'opérateur de densité ρ*_{nsc}* ; et dans lequel ladite connectivité et ladite opérabilité dudit dispositif de calcul quantique (1) permettent en outre de préparer ledit état quantique du système par préparation de la pluralité de sous-systèmes dudit sous-ensemble système dans un état de solution souhaité et par préparation, pour chaque sous-système de départ *Qₙ*, de l'au moins un sous-système connecté *Q_{nsc}* dudit sous-ensemble auxiliaire dans l'état quantique prédéterminé décrit par l'opérateur de densité ρ*_{nsc}*, ledit procédé comprenant en outre :
la préparation dudit état quantique du système au moyen dudit dispositif de calcul quantique (1) ;
et dans lequel l'au moins un sous-système initialement sélectionné *Q*_{*n*0} comprend ledit au moins un sous-système de départ *Qₙ*, et dans lequel pour chacun desdits sous-systèmes de départ *Qₙₛ*, la réalisation de la nₛ-ième mesure POVM (Positive Operator Valued Measure) locale lors de l'étape de mesure initiale s'effectue par mise en œuvre, au moyen dudit dispositif de calcul quantique (1), de ladite réalisation potentiellement imparfaite de ladite opération unitaire conjointe *Uₙₛ*,*_{nsc}* puis de ladite mesure quantique conjointe décrite par ladite pluralité d'opérateurs de mesure ${M}_{{m}_{{n}_{s} , {n}_{sc}}}^{\left({n}_{s}, {n}_{sc}\right)}$ sur ledit système conjoint dudit sous-système de départ *Qₙₛ* et dudit au moins un sous-système connecté *Q_{nsc}* qui se trouve dans l'état quantique précédemment déterminé décrit par l'opérateur de densité ρ*_{nsc}*, pour ainsi obtenir un résultat de mesure *m_{ns,nsc}*.

12. Procédé selon la revendication 11, dans lequel ladite connectivité et ladite opérabilité dudit dispositif de calcul quantique permettent de préparer ledit état quantique du système par préparation de la pluralité de sous-systèmes dudit sous-ensemble système dans l'état de solution souhaité par application d'une porte quantique.

13. Procédé selon la revendication 11 ou 12, dans lequel ladite itération se termine lorsque, pour chaque sous-système Qₙ dudit sous-ensemble système, la mesure POVM (Positive Operator Valued Measure) locale a été réalisée.

14. Procédé selon l'une quelconque des revendications précédentes, dans lequel au moins une étape de mesure itérative comprend la sélection des sous-systèmes Qₙ sélectionnés itérativement en fonction du résultat de mesure d'une étape de mesure initiale ou itérative précédente.

15. Procédé selon l'une quelconque des revendications précédentes, dans lequel, pour au moins un sous-système Qₙ sélectionné itérativement, l'état quantique précédemment déterminé dudit au moins un sous-système connecté *Q_{nc}* est un état quantique prédéterminé décrit par l'opérateur de densité *ρ_{nc}* prédéterminé ; ledit procédé comprenant en outre la préparation de l'au moins un sous-système connecté *Qₙ* dans ledit état quantique prédéterminé avant la réalisation de la n-ième mesure POVM (Positive Operator Valued Measure) locale sur ledit au moins un sous-système Qₙ sélectionné itérativement lors de l'étape de mesure itérative.

16. Procédé selon la revendication 15, dans lequel ledit état quantique prédéterminé est un état quantique pur.

17. Procédé selon l'une quelconque des revendications précédentes, dans lequel ledit dispositif de calcul quantique (1) peut en outre opérer pour mettre en œuvre, pour au moins un desdits sous-systèmes Qₙ, une pluralité de P réalisations potentiellement imparfaites d'opérations unitaires conjointes ${U}_{n , {n}_{c}}^{\left(p\right)} , p = 1 , … , P$, et une pluralité de R mesures quantiques conjointes sur le système conjoint dudit sous-système Qₙ et de l'au moins un sous-système connecté *Q_{nc}*, ladite réalisation de ladite r-ième mesure quantique conjointe, r = 1, ..., R, étant décrite par une pluralité d'opérateurs de mesure ${M}_{{m}_{n , {n}_{c}}}^{\left(r, n, {n}_{c}\right)}$, chaque opérateur de mesure ${M}_{{m}_{n , {n}_{c}}}^{\left(r, n, {n}_{c}\right)}$ étant associé à un résultat de mesure ${m}_{n , {n}_{c}}^{\left(r\right)}$, et ladite réalisation de ladite n-ième mesure POVM (Positive Operator Valued Measure) locale sur ledit sous-système Qₙ comprend la sélection d'une desdites opérations unitaires conjointes ${U}_{n , {n}_{c}}^{\left(p\right)}$ de ladite pluralité et la sélection d'une desdites mesures quantiques conjointes de ladite pluralité qui est décrite par les opérateurs de mesure ${M}_{{m}_{n , {n}_{c}}}^{\left(r, n, {n}_{c}\right)}$ et la mise en œuvre, au moyen dudit dispositif de calcul quantique (1), de ladite réalisation potentiellement imparfaite de ladite opération unitaire conjointe ${U}_{n , {n}_{c}}^{\left(p\right)}$ sélectionnée puis de ladite mesure quantique conjointe sélectionnée décrite par ladite pluralité d'opérateurs de mesure ${M}_{{m}_{n , {n}_{c}}}^{\left(r, n, {n}_{c}\right)}$ sur ledit système conjoint dudit sous-système Qₙ sélectionné itérativement et dudit au moins un sous-système connecté *Q_{nc}*.

18. Procédé selon la revendication 17, dans lequel ladite sélection s'effectue en fonction du résultat de mesure d'une étape de mesure initiale ou itérative précédente et/ou ladite sélection est une sélection aléatoire.

19. Procédé selon l'une quelconque des revendications précédentes, dans lequel, pour au moins un sous-système Qₙ sélectionné itérativement, la n_{c}-ième mesure POVM (Positive Operator Valued Measure) locale a été réalisée sur l'au moins un sous-système connecté *Q_{nc}* avec le résultat de mesure *m_{nc}* lors de l'étape de mesure initiale ou lors d'une des étapes de mesure précédentes, l'état quantique précédemment déterminé de l'au moins un sous-système connecté *Q_{nc}* est l'état dudit au moins un sous-système connecté *Q_{nc}* postérieur à la réalisation de la n_{c}-ième mesure POVM (Positive Operator Valued Measure) locale sur ledit sous-système *Q_{nc}* connecté, et ledit procédé comprend en outre l'inférence de l'opérateur de densité *ρₙ* réduit dudit au moins un sous-système connecté *Q_{nc}* compte tenu dudit résultat de mesure *m_{nc}*.

20. Procédé selon l'une quelconque des revendications précédentes, dans lequel, pour au moins un deuxième sous-système *Q*_{*n*2} sélectionné itérativement dans le cadre d'une deuxième étape de mesure itérative, l'au moins un sous-système connecté *Q*_{*n*1,2*c*} est également l'au moins un sous-système connecté *Q*_{*n*1,2*c*} d'un premier sous-système *Q*_{*n*1} précédemment sélectionné dans le cadre d'une étape de mesure itérative précédente, l'état quantique précédemment déterminé dudit au moins un sous-système connecté *Q*_{*n*1},_{2*c*} de ladite deuxième étape de mesure itérative étant l'état dudit au moins un sous-système connecté *Q*_{*n*1,2*c*} postérieur à la réalisation de ladite n₁-ième mesure POVM (Positive Operator Valued Measure) locale sur ledit premier sous-système *Q*_{*n*1} lors de ladite étape de mesure itérative précédente, et ledit procédé comprend en outre l'inférence de l'opérateur de densité réduit de l'au moins un sous-système connecté *Q*_{*n*1,2*c*} lors de la deuxième étape de mesure itérative compte tenu dudit résultat de mesure *m*_{*n*1,*n*1},_{2*c*} obtenu lors de la réalisation de la n₁-ième mesure POVM (Positive Operator Valued Measure) locale sur ledit premier sous-système *Q*_{*n*1} lors de ladite étape de mesure précédente.

21. Procédé selon l'une quelconque des revendications précédentes, dans lequel, pour au moins un sous-système Qₙ, la pluralité d'opérateurs de mesure ${M}_{{m}_{n , {n}_{c}}}^{\left(n, {n}_{c}\right)}$ décrivent une réalisation potentiellement imparfaite d'une mesure projective.

22. Procédé selon la revendication 21, dans lequel, pour au moins un sous-système Qₙ, la pluralité d'opérateurs de mesure ${M}_{{m}_{n , {n}_{c}}}^{\left(n, {n}_{c}\right)}$ décrivent la réalisation d'une mesure projective.

23. Procédé selon l'une quelconque des revendications précédentes, dans lequel, pour au moins un sous-système Qₙ, la mesure quantique conjointe est une mesure quantique locale eu égard au sous-système Qₙ et à l'au moins un sous-système connecté *Q_{nc}* dudit système conjoint de telle façon que chaque opérateur de mesure ${M}_{{m}_{n , {n}_{c}}}^{\left(n, {n}_{c}\right)}$ de ladite pluralité est un produit tensoriel ${M}_{{m}_{n , {n}_{c}}}^{\left(n, {n}_{c}\right)} = {M}_{{m}_{n}}^{\left(n\right)} ⊗ {M}_{{m}_{{n}_{c}}}^{\left({n}_{c}\right)}$, où ${M}_{{m}_{n}}^{\left(n\right)}$ est un opérateur de mesure propre à une première mesure quantique définie sur le sous-système Qₙ avec un résultat de mesure associé mₙ et ${M}_{{m}_{{n}_{c}}}^{\left({n}_{c}\right)}$ est un opérateur de mesure propre à une deuxième mesure quantique définie sur l'au moins un sous-système connecté *Q_{nc}* avec un résultat de mesure associé *m_{nc}*.

24. Procédé selon la revendication 23, dans lequel la mesure quantique est locale eu égard à chaque sous-système dudit système conjoint, c'est-à-dire que les opérateurs de mesure ${M}_{{m}_{n , {n}_{c}}}^{\left(n, {n}_{c}\right)}$ sont des produits tensoriels d'opérateurs de mesure propres aux mesures quantiques sur chaque sous-système dudit système conjoint.

25. Procédé selon l'une quelconque des revendications précédentes, dans lequel, pour au moins un sous-système Qₙ, ladite réalisation de ladite opération unitaire *U*_{*n*,*nc*} est une réalisation parfaite de ladite opération unitaire *U*_{*n*,*nc*}.

26. Procédé selon l'une quelconque des revendications précédentes, ledit procédé comprenant en outre, pour au moins un sous-système Qₙ sélectionné initialement ou itérativement :
a. la fourniture de l'entrée suivante dans un ordinateur classique :
le résultat de mesure *m*_{*n*,*n*} et une représentation de l'opérateur de mesure associé ${M}_{{m}_{n , {n}_{c}}}^{\left(n, {n}_{c}\right)}$;
une représentation d'un canal quantique *E*_{*n*,*nc*} décrivant la réalisation potentiellement imparfaite de ladite opération unitaire conjointe *U*_{*n*,*nc*};
une représentation de l'opérateur de densité *ρₙ* réduit dudit au moins un sous-système connecté *Q_{nc}*;
une représentation d'opérateurs de base ${B}_{{a}_{n}}^{\left(n\right)}$ d'une base orthonormale locale d'un espace d'opérateurs associé à un espace de Hilbert Hₙ dudit sous-système Qₙ;
b. le calcul, par l'ordinateur classique, d'une représentation d'un effet local ${\prod }_{{m}_{n , {n}_{c}}}^{\left(n, {n}_{c}\right)} = {\sum }_{{a}_{n}} {π}_{{a}_{n}}^{\left(n, {n}_{c}, {m}_{n , {n}_{c}}\right)} {B}_{{a}_{n}}^{\left(n\right)}$ associé à la mesure POVM (Positive Operator Valued Measure) locale réalisée sur ledit sous-système Qₙ sélectionné, les coefficients ${π}_{{a}_{n}}^{\left(n, {n}_{c}, {m}_{n , {n}_{c}}\right)} = tr \left[{M}_{{m}_{n , {n}_{c}}}^{\left(n, {n}_{c}\right)}{E}_{n , {n}_{c}}\left({B}_{{a}_{n}}^{\left(n\right)}⊗{ρ}_{{n}_{c}}\right){M}_{{m}_{n , {n}_{c}}}^{\left(n, {n}_{c}\right) †}\right]$ étant donnés par une trace d'un produit d'une image d'un produit tensoriel de l'opérateur de base ${B}_{{a}_{n}}^{\left(n\right)}$ et de l'opérateur de densité *ρ_{nc}* réduit sous le canal quantique *E*_{*n*,*nc*}, et de l'opérateur de mesure ${M}_{{m}_{n , {n}_{c}}}^{\left(n, {n}_{c}\right)}$ et son conjugué hermitien.

27. Dispositif de calcul quantique (1), ledit dispositif de calcul quantique (1) comprenant un système composite (2) comprenant une pluralité de sous-systèmes mécaniques quantiques Qₙ, n = 1, ..., N, N ≥ 2, et ledit dispositif de calcul quantique (1) ayant une connectivité et une opérabilité permettant de mettre en œuvre, pour chacun desdits sous-systèmes Qₙ, une
quantique conjointe sur un système conjoint dudit sous-système Qₙ et d'au moins un sous-système connecté *Qₙ* de ladite pluralité de sous-systèmes, ladite réalisation de ladite mesure quantique conjointe étant décrite par une pluralité d'opérateurs de mesure ${M}_{{m}_{n , {n}_{c}}}^{\left(n, {n}_{c}\right)}$, chaque opérateur de mesure ${M}_{{m}_{n , {n}_{c}}}^{\left(n, {n}_{c}\right)}$ étant associé à un résultat de mesure *m*_{*n*,*nc*},
ledit dispositif de calcul quantique (1) comprenant en outre des moyens permettant de réaliser une n₀-ième mesure POVM (Positive Operator Valued Measure) locale sur au moins un sous-système initialement sélectionné *Q*_{*n*0} pour ainsi obtenir un résultat de mesure mₙ₀, et un organe de commande (5),
ledit dispositif de calcul quantique (1) pouvant opérer, sous la commande de l'organe de commande (5), pour mettre en œuvre une étape de mesure initiale qui comprend pour au moins un sous-système initialement sélectionné *Q*_{*n*0}, la réalisation de la n₀-ième mesure POVM (Positive Operator Valued Measure) locale sur ledit sous-système initialement sélectionné *Q*_{*n*0} pour ainsi obtenir le résultat de mesure *m*_{*n*0} et pour mettre en œuvre une étape de mesure itérative qui comprend, pour au moins un sous-système Qₙ sélectionné itérativement, la réalisation d'une n-ième mesure POVM (Positive Operator Valued Measure) locale sur ledit sous-système Qₙ sélectionné itérativement par mise en œuvre, au moyen dudit dispositif de calcul quantique (1), de ladite réalisation potentiellement imparfaite de ladite opération unitaire conjointe *U_{n,nc}* puis de ladite mesure quantique conjointe décrite par ladite pluralité d'opérateurs de mesure ${M}_{{m}_{n , {n}_{c}}}^{\left(n, {n}_{c}\right)}$ sur ledit système conjoint dudit sous-système Qₙ sélectionné itérativement et dudit au moins un sous-système connecté *Q_{nc}*, ledit au moins un sous-système connecté *Q_{nc}* se trouvant dans un état quantique précédemment déterminé décrit par un opérateur de densité *ρₙ*, pour ainsi obtenir un résultat de mesure *m*_{*n*,*nc*};
étant entendu que, pour au moins un sous-système Qₙ sélectionné itérativement, au moins un desdits sous-systèmes connectés *Q_{nc}* est un desdits au moins un sous-système initialement sélectionné *Q*_{*n*0}.

28. Dispositif de calcul quantique (1) selon la revendication 27, dans lequel lesdits sous-systèmes mécaniques quantiques sont des qubits.

29. Dispositif de calcul quantique (1) selon la revendication 27 ou 28, dans lequel, pour au moins un sous-système Qₙ sélectionné itérativement, chacun desdits sous-systèmes connectés est un desdits au moins un sous-système initialement sélectionné *Qₙ₀*.
